# EUROPEAN PATENT SPECIFICATION

(11) **EP 4 226 986 B1**
(45) Date of publication and mention of the grant of the patent: **18.02.2026**
(21) Application number: 22204037.0
(22) Date of filing: 27.10.2022
(51) Int. Cl.: A63F 13/497, A63F 13/79, A63F 13/86

(54) **INFORMATION PROCESSING SYSTEM, INFORMATION PROCESSING APPARATUS, INFORMATION PROCESSING PROGRAM AND INFORMATION PROCESSING METHOD**
INFORMATIONSVERARBEITUNGSSYSTEM, INFORMATIONSVERARBEITUNGSVORRICHTUNG, INFORMATIONSVERARBEITUNGSPROGRAMM UND INFORMATIONSVERARBEITUNGSVERFAHREN
SYSTÈME, APPAREIL ET PROGRAMME DE TRAITEMENT D'INFORMATIONS ET PROCÉDÉ DE TRAITEMENT D'INFORMATIONS

(30) Priority: 08.11.2021 JP 2021181849
(43) Date of publication of application: 16.08.2023
(73) Proprietor: Nintendo Co., Ltd., Kyoto 601-8501 (JP)
(72) Inventor: KUBO, Kenta, Minami-ku, Kyoto, 601-8501 (JP); KAWAMOTO, Koichi, Minami-ku, Kyoto, 601-8501 (JP)
(74) Representative: Lorenz Seidler Gossel Part. mbB

(56) References cited:
- EP-A1- 2 221 093
- EP-A1- 2 878 346
- WO-A1-2018/042468
- JP-B2- 6 896 323

## Description

### BACKGROUND OF THE INVENTION

### Field of the invention

The present invention is related to an information processing system, an information processing apparatus, an information processing program and an information processing method, and more specifically, an information processing system, an information processing apparatus, an information processing program and an information processing method, in which a player performs a virtual battle against past other players.

### Description of the related art

An example of the related art is disclosed in a web page (https://www.youtube.com/watch?v=JbuJZP0_8iQ). According to this web page, in a screen for selecting a ghost that is a player that plays a game according to past play data, corresponding to an icon image used by each ghost player, an image of the national flag, a name of the player and a running time of the course played are displayed. Furthermore, when playing with a controller attached to an attachment that imitates a steering wheel of a car, an image of the steering wheel is also displayed to indicate that.

EP 2 221 093 A1 discloses a networked system for managing user-defined in-game challenges. A first player defines a challenge (start/end points, metrics such as time or score). The server stores it and makes it available to others. When further players attempt the challenge, their performance data are uploaded and compared. The server ranks results and can transmit replay data or ghost representations of previous runs to clients, allowing users to compete asynchronously against others' performances within the same game level.

WO 2018/042468 describes networked translation and communication tools integrated into online games. Includes provision for transmitting contextual text, voice, and in-game communication data across players and servers, ensuring synchronized interpretation and display in multiplayer or asynchronous interactions.

However, in this related art, a feature of the ghost is only identifiably displayed, and it is impossible to select a suitable ghost according to a state of play of the player, such as using the attachment.

### SUMMARY OF THE INVENTION

It is a primary object of the present invention to provide a novel information processing system, information processing apparatus, information processing program and information processing method.

Moreover, it is another object of the present invention to provide an information processing system, information processing apparatus, information processing program and information processing method, capable of selecting a suitable ghost according to a play state of the player.

The invention is defined by the appended claims.

The above described objects and other objects, features, aspects and advantages of the invention will become more apparent from the following detailed description when taken in conjunction with the accompanying drawings.

### BRIEF DESCRIPTION OF THE DRAWINGS

Figure 1 is an illustration view showing a non-limiting example state wherein a left controller and a right controller are attached to a main body apparatus of this embodiment.
Figure 2 is an illustration view showing a non-limiting example state where the left controller and the right controller are detached from the main body apparatus, respectively.
Figure 3 is six orthogonal views showing a non-limiting example main body apparatus shown in Figure 1 and Figure 2.
Figure 4 is sixth orthogonal views showing a non-limiting example left controller shown in Figure 1 and Figure 2.
Figure 5 is sixth orthogonal views showing a non-limiting example right controller shown in Figure 1 and Figure 2.
Figure 6 is a block diagram showing a non-limiting example internal configuration of the main body apparatus shown in Figure 1 and Figure 2.
Figure 7 is a block diagram showing non-limiting example internal configurations of the main body apparatus, the left controller and the right controller shown in Figure 1 and Figure 2.
Figure 8 is a view showing a non-limiting example information processing system according to an embodiment.
Figure 9 is a view showing a non-limiting example single-play menu screen.
Figure 10 is a view showing a non-limiting example game screen of a minigame that a human player plays alone.
Figure 11 is a view showing a non-limiting example ghost battle screen.
Figure 12 is a view showing a non-limiting example ghost battle selection screen.
Figure 13 is a view showing a non-limiting example first selection screen for selecting a worldwide ghost.
Figure 14 is a view showing a non-limiting example second selection screen for selecting a friend ghost.
Figure 15 is a view showing a non-limiting example memory map of a DRAM of the main body apparatus shown in Figure 6.
Figure 16 is a view showing non-limiting example specific contents of player data shown in Figure 15.
Figure 17 is a flowchart showing a first part of non-limiting example overall processing of a processor of the main body apparatus shown in Figure 6.
Figure 18 is a flowchart showing a second part of the non-limiting example overall processing of the processor of the main body apparatus shown in Figure 6, following Figure 17.
Figure 19 is a flowchart showing a third part of the non-limiting example overall processing of the processor of the main body apparatus shown in Figure 6, following Figure 18.
Figure 20 is a flowchart showing a fourth part of the non-limiting example overall processing of the processor of the main body apparatus shown in Figure 6, following Figure 18.
Figure 21 is a flowchart showing a fifth part of the non-limiting example overall processing of the processor of the main body apparatus shown in Figure 6, following Figure 20.
Figure 22 is a flowchart showing a sixth part of the non-limiting example overall processing of the processor of the main body apparatus shown in Figure 6, following Figure 19 to Figure 21.
Figure 23 is a flowchart showing a seventh part of the non-limiting example overall processing of the processor of the main body apparatus shown in Figure 6, following Figure 17.
Figure 24 is a flowchart showing non-limiting example individual minigame play processing of the processor of the main body apparatus shown in Figure 6.
Figure 25 is a flowchart showing non-limiting example comprehensive test processing of the processor of the main body apparatus shown in Figure 6.
Figure 26 is a flowchart showing non-limiting example multi-play mode processing of the processor of the main body apparatus shown in Figure 6.
Figure 27 is a flowchart showing a first part of non-limiting example ghost data registration and transmission processing of a CPU of a server shown in Figure 8.
Figure 28 is a flowchart showing a second part of the non-limiting example ghost data registration and transmission processing of the CPU of a server shown in Figure 8, following Figure 27.
Figure 29 is a flowchart showing a third part of the non-limiting example ghost data registration and transmission processing of the CPU of a server shown in Figure 8, following Figure 28.

### DETAILED DESCRIPTION OF NON-LIMITING EXAMPLE EMBODIMENTS

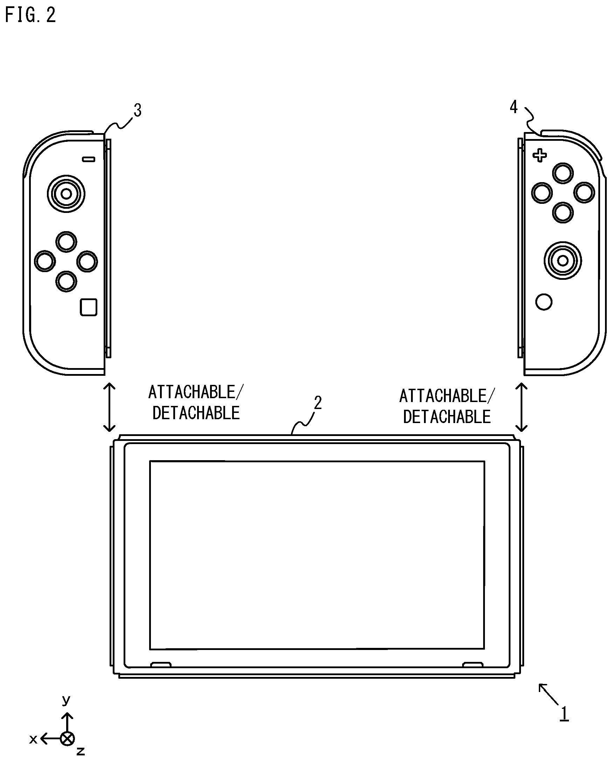

A non-limiting example game system according to an exemplary embodiment will be described in the following. The non-limiting example game system 1 according to this embodiment comprises a main body apparatus (an information processing apparatus that functions as a game apparatus main body in this embodiment) 2, a left controller 3 and a right controller 4. The left controller 3 and the right controller 4 are attachable to or detachable from the main body apparatus 2, respectively. That is, the game system 1 can be used as a unified apparatus formed by attaching each of the left controller 3 and the right controller 4 to the main body apparatus 2. Moreover, in the game system 1, the main body apparatus 2, the left controller 3 and the right controller 4 can also be used as separate bodies (see Figure 2). In the following, the hardware structure of the game system 1 according to this embodiment will be described, and then, the control of the game system 1 of this embodiment will be described.

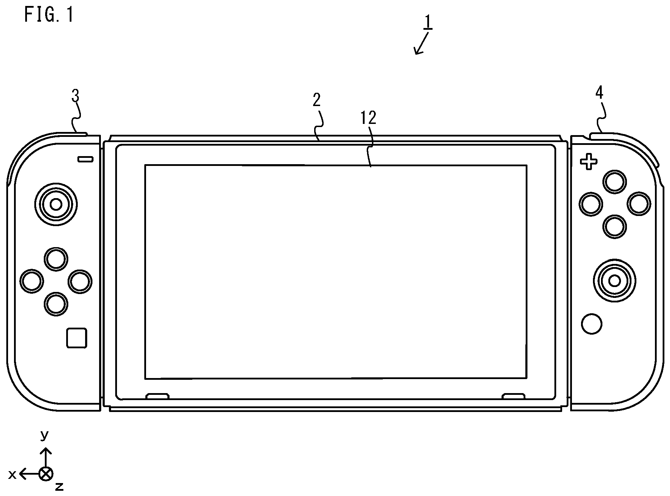

Figure 1 is an illustration view showing an example of a state where the left controller 3 and the right controller 4 are attached to the main body apparatus 2. As shown in Figure 1, the left controller 3 and the right controller 4 is respectively attached to the main body apparatus 2, thereby to be unified it. The main body apparatus 2 is an apparatus for performing various processing (game processing, for example) in the game system 1. The main body apparatus 2 comprises a display 12. Each of the left controller 3 and the right controller 4 is a device comprising an operation section with which a user provides inputs.

Figure 2 is an illustration view showing an example of a state where the left controller 3 and the right controller 4 are detached from the main body apparatus 2, respectively. As shown in Figure 1 and Figure 2, each of the left controller 3 and the right controller 4 is attachable to and detachable from the main body apparatus 2. In addition, it should be noted that the left controller 3 and the right controller 4 may be referred to collectively as a "controller" in the following.

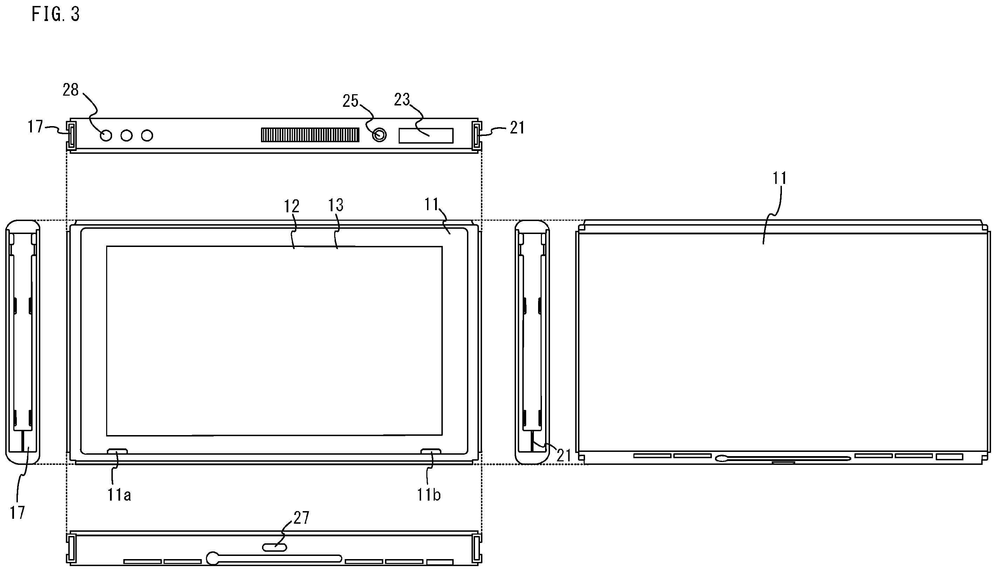

Figure 3 is six orthogonal views showing an example of the main body apparatus 2. As shown in Figure 3, the main body apparatus 2 comprises a housing 11 having an approximately plate-shape. In this embodiment, a main surface (in other words, a surface on a front side, that is, a surface on which the display 12 is provided) of the housing 11 has a generally rectangular shape.

In addition, a shape and a size of the housing 11 are optional. As an example, the housing 11 may be of a portable size. Moreover, the main body apparatus 2 alone or the unified apparatus obtained by attaching the left controller 3 and the right controller 4 to the main body apparatus 2 may be a mobile apparatus. The main body apparatus 2 or the unified apparatus may be a handheld apparatus. The main body apparatus 2 or the unified apparatus may be a handheld apparatus or a portable apparatus.

As shown in Figure 3, the main body apparatus 2 comprises the display 12 that is provided on the main surface of the housing 11. The display 12 displays an image generated by the main body apparatus 2. In this embodiment, the display 12 is a liquid crystal display device (LCD). However, the display 12 may be an arbitrary type display.

Moreover, the main body apparatus 2 comprises a touch panel 13 on a screen of the display 12. In this embodiment, the touch panel 13 is of a type that allows a multi-touch input (e.g., a capacitive type). However, the touch panel 13 may be of any type, and for example, the touch panel 13 may be of a type that allows a single-touch input (e.g., a resistive type).

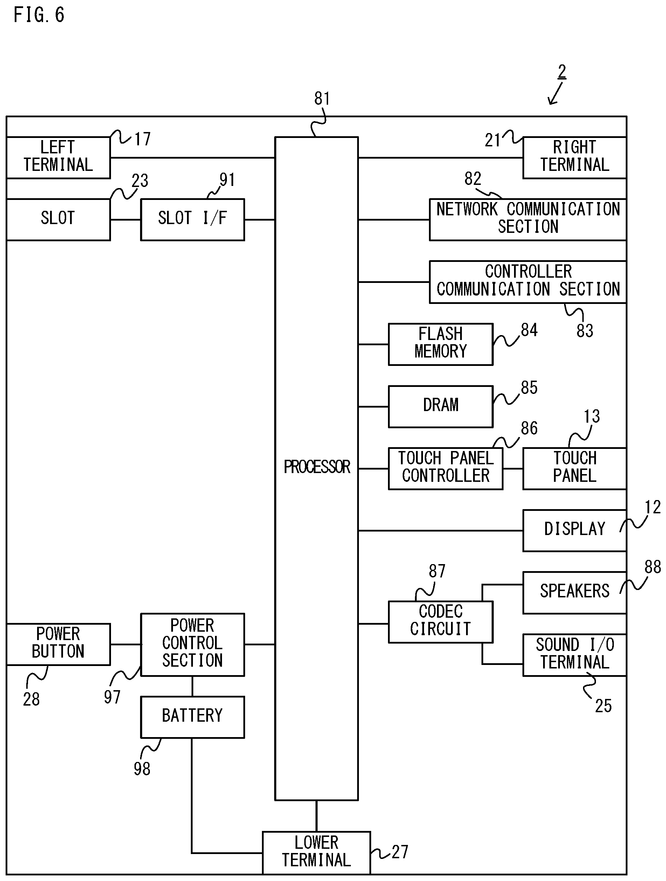

The main body apparatus 2 includes speakers (i.e., speakers 88 shown in Figure 6) within the housing 11. As shown in Figure 3, speaker holes 11a and 11b are formed on the main surface of the housing 11. Then, sounds output from the speakers 88 are emitted through the speaker holes 11a and 11b.

Moreover, the main body apparatus 2 comprises a left terminal 17 that is a terminal for the main body apparatus 2 to perform wired communication with the left controller 3, and a right terminal 21 that is a terminal for the main body apparatus 2 performs wired communication with the right controller 4.

As shown in Figure 3, the main body apparatus 2 comprises a slot 23. The slot 23 is provided on an upper side surface of the housing 11. The slot 23 has a shape to which a predetermined type of storage medium can be attached. The predetermined type of storage medium is, for example, a dedicated storage medium (e.g., a dedicated memory card) for the game system 1 or an information processing apparatus of the same type as the game system 1. The predetermined type of storage medium is used to store, for example, data (e.g., saved data of an application or the like) used by the main body apparatus 2 and/or a program (e.g., a program for an application or the like) executed by the main body apparatus 2. Moreover, the main body apparatus 2 comprises a power button 28.

The main body apparatus 2 comprises a lower terminal 27. The lower terminal 27 is a terminal through which the main body apparatus 2 performs communication with a cradle. In this embodiment, the lower terminal 27 is a USB connector (more specifically, a female connector). When the unified apparatus or the main body apparatus 2 alone is put on the cradle, the game system 1 can display on a stationary monitor an image generated by and output from the main body apparatus 2. Moreover, in this embodiment, the cradle has the function of charging the unified apparatus or the main body apparatus 2 alone that is put on the cradle. Moreover, the cradle has a function of a hub device (specifically, a USB hub).

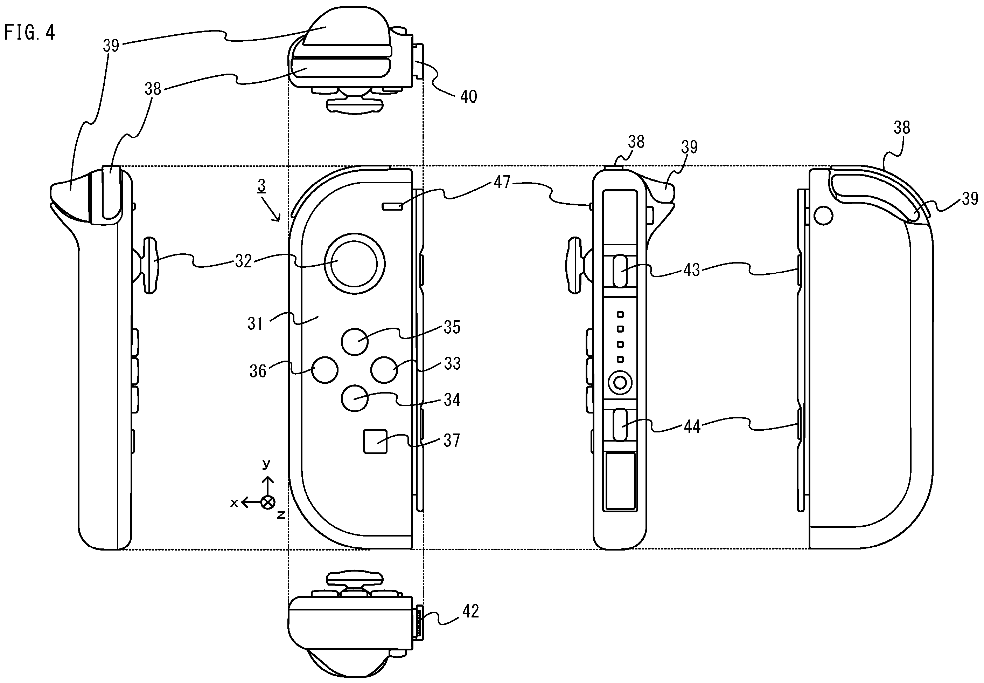

Figure 4 is six orthogonal views showing an example of the left controller 3. As shown in Figure 4, the left controller 3 comprises a housing 31. In this embodiment, the housing 31 has a vertically long shape, that is, is shaped to be long in an up-down direction (i.e., a y-axis direction shown in Figure 1 and Figure 4). In a state where the left controller 3 is detached from the main body apparatus 2, the left controller 3 can also be held in a direction that the left controller 3 is vertically long. The housing 31 has a shape and a size that when held in a direction that the housing 31 is vertically long, the housing 31 can be held with one hand, especially the left hand. Moreover, the left controller 3 can also be held in a direction that the left controller 3 is horizontally long. When held in the direction that the left controller 3 is horizontally long, the left controller 3 may be held with both hands.

The left controller 3 comprises an analog stick 32. As shown in Figure 4, the analog stick 32 is provided on a main surface of the housing 31. The analog stick 32 can be used as a direction input section capable of inputting a direction. The user tilts the analog stick 32 and thereby can input a direction corresponding to a tilted direction (and input a magnitude corresponding to a tilted angle). In addition, the left controller 3 may comprise a cross key or a slide stick capable of performing a slide input, or the like as the direction input section, instead of the analog stick. Moreover, in this embodiment, it is possible to provide an input by pressing the analog stick 32.

The left controller 3 comprises various operation buttons. The left controller 3 comprises four (4) operation buttons 33-36 (specifically, a right direction button 33, a down direction button 34, an up direction button 35 and a left direction button 36) on the main surface of the housing 31. Furthermore, the left controller 3 comprises a record button 37 and a "-" (minus) button 47. The left controller 3 comprises an L-button 38 and a ZL-button 39 in an upper left portion of a side surface of the housing 31. Moreover, the left controller 3 comprises an SL-button 43 and an SR-button 44 on a surface at a side to be attached to the main body apparatus 2 out of side surfaces of the housing 31. These operation buttons are used to input instructions according to various programs (e.g., an OS program and an application program) executed by the main body apparatus 2.

Moreover, the left controller 3 comprises a terminal 42 for the left controller 3 to perform wired communication with the main body apparatus 2.

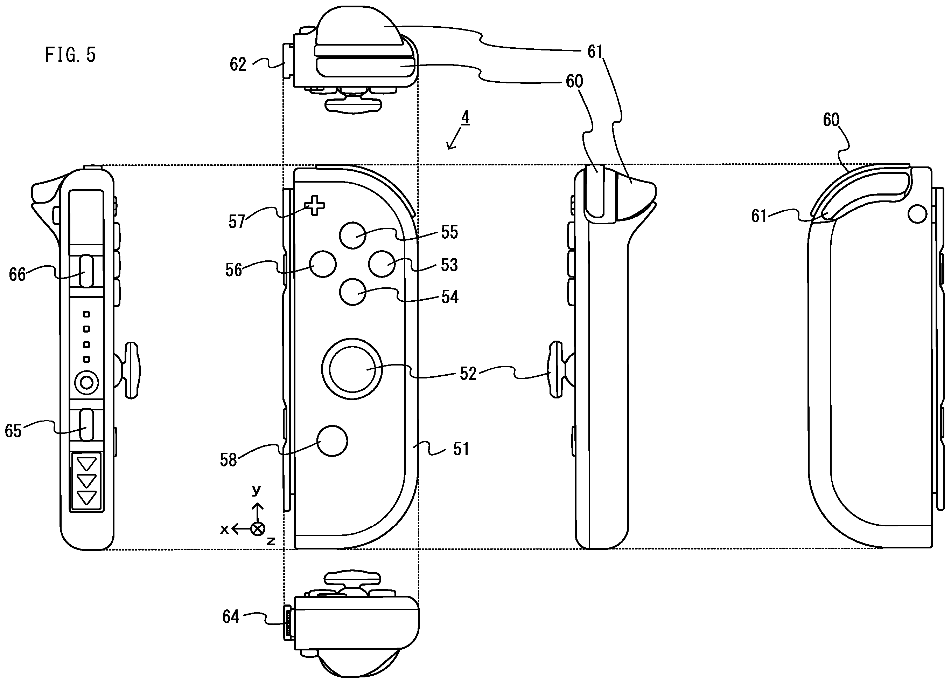

Figure 5 is six orthogonal views showing an example of the right controller 4. As shown in Figure 5, the right controller 4 comprises a housing 51. In this embodiment, the housing 51 has a vertically long shape, that is, a shape long in the up-down direction. In a state where the right controller 4 is detached from the main body apparatus 2, the right controller 4 can also be held in a direction that the right controller 4 is vertically long. The housing 51 has a shape and a size that when held in a direction that the housing 51 is vertically long, the housing 51 can be held with one hand, especially the right hand. Moreover, the right controller 4 can also be held in a direction that the right controller 4 is horizontally long. When held in the direction that the right controller 4 is horizontally long, the right controller 4 may be held with both hands.

Similar to the left controller 3, the right controller 4 comprises an analog stick 52 as a direction input section. In this embodiment, the analog stick 52 has the same configuration as that of the analog stick 32 of the left controller 3. Moreover, the right controller 4 may comprise a cross key or a slide stick capable of performing a slide input, or the like as the direction input section, instead of the analog stick. Moreover, similar to the left controller 3, the right controller 4 comprises four (4) operation buttons 53-56 (specifically, an A-button 53, a B-button 54, an X-button 55 and a Y-button 56) on the main surface of the housing 51. Furthermore, the right controller 4 comprises a "+" (plus) button 57 and a home button 58. Moreover, the right controller 4 comprises an R-button 60 and a ZR-button 61 in an upper right portion of a side surface of the housing 51. Moreover, similar to the left controller 3, the right controller 4 comprises an SL-button 65 and an SR-button 66.

Moreover, the right controller 4 comprises a terminal 64 for the right controller 4 to perform wired communication with the main body apparatus 2.

Figure 6 is a block diagram showing an example of an internal configuration of the main body apparatus 2. The main body apparatus 2 comprises components 81-91, 97 and 98 shown in Figure 6 in addition to components shown in Figure 3. Some of the components 81-91, 97 and 98 may be mounted as electronic components on an electronic circuit board to be accommodated in the housing 11.

The main body apparatus 2 comprises a processor 81. The processor 81 is an information processing section that performs various types of information processing to be performed by the main body apparatus 2, and may be composed only of a CPU (Central Processing Unit), or may be composed of a SoC (System-on-a-chip) having a plurality of functions such as a CPU function and a GPU (Graphics Processing Unit) function. The processor 81 executes an information processing program (e.g., a game program) stored in a storage section (specifically, an internal storage medium such as a flash memory 84, an external storage medium attached to the slot 23, or the like), thereby performing the various types of information processing.

The main body apparatus 2 comprises a flash memory 84 and a DRAM (Dynamic Random Access Memory) 85 as examples of internal storage media incorporated in the main body apparatus 2. The flash memory 84 and the DRAM 85 are connected to the processor 81. The flash memory 84 is a memory mainly used to store various data (or programs) to be saved in the main body apparatus 2. The DRAM 85 is a memory used to temporarily store various data used for information processing.

The main body apparatus 2 comprises a slot interface (hereinafter, abbreviated as "I/F") 91. The slot I/F 91 is connected to the processor 81. The slot I/F 91 is connected to the slot 23, and reads and writes, in accordance with instructions from the processor 81, data from and to the predetermined type of storage medium (e.g., a dedicated memory card) attached to the slot 23.

The processor 81 appropriately reads and writes data from and to the flash memory 84, the DRAM 85 and each of the above storage media, thereby performing the above-described information processing.

The main body apparatus 2 comprises a network communication section 82. The network communication section 82 is connected to the processor 81. The network communication section 82 performs communication (specifically, wireless communication) with external apparatus via a network. In this embodiment, as a first communication manner, the network communication section 82 is connected to a wireless LAN (Local Area Network) to perform communication with external apparatus by a system in conformity with the Wi-Fi standard. Moreover, as a second communication manner, the network communication section 82 performs wireless communication with a further main body apparatus 2 of the same type by a predetermined communication system (e.g., communication based on a unique protocol or infrared light communication). In addition, the wireless communication in the above-described second communication manner achieves a function of enabling so-called "local communication", in which the main body apparatus 2 can perform wireless communication with further main body apparatus 2 placed in a closed LAN, and a plurality of main body apparatus 2 perform communication directly with each other to transmit and receive data.

The main body apparatus 2 comprises a controller communication section 83. The controller communication section 83 is connected to the processor 81. The controller communication section 83 performs wireless communication with the left controller 3 and/or the right controller 4. Although communication system between the main body apparatus 2 and the left controller 3 and the right controller 4 is optional, in this embodiment, the controller communication section 83 performs communication with the left controller 3 and with the right controller 4 in conformity with Bluetooth (registered trademark) standard.

The processor 81 is connected to the left terminal 17, the right terminal 21 and the lower terminal 27. When performing wired communication with the left controller 3, the processor 81 transmits data to the left controller 3 via the left terminal 17 and receives (or acquires) operation data from the left controller 3 via the left terminal 17. Moreover, when performing wired communication with the right controller 4, the processor 81 transmits data to the right controller 4 via the right terminal 21 and receives (or acquires) operation data from the right controller 4 via the right terminal 21. Moreover, when performing communication with the cradle, the processor 81 transmits data to the cradle via the lower terminal 27. Thus, in this embodiment, the main body apparatus 2 can perform both wired communication and wireless communication with each of the left controller 3 and the right controller 4. Moreover, when the unified apparatus formed by attaching the left controller 3 and the right controller 4 to the main body apparatus 2 or the main body apparatus 2 alone is attached to the cradle, the main body apparatus 2 can output data (e.g., display image data and sound data) to the stationary monitor or the like via the cradle.

Here, the main body apparatus 2 can perform communication with a plurality of left controllers 3 simultaneously (in other words, in parallel). Moreover, the main body apparatus 2 can perform communication with a plurality of right controllers 4 simultaneously (in other words, in parallel). Therefore, a plurality of users can simultaneously provide inputs to the main body apparatus 2, each using a set of the left controller 3 and the right controller 4. As an example, a first user can provide an input to the main body apparatus 2 using a first set of the left controller 3 and the right controller 4, and simultaneously, a second user can provide an input to the main body apparatus 2 using a second set of the left controller 3 and the right controller 4.

The main body apparatus 2 comprises a touch panel controller 86 that is a circuit for controlling the touch panel 13. The touch panel controller 86 is connected between the touch panel 13 and the processor 81. Based on a signal from the touch panel 13, the touch panel controller 86 generates, for example, data indicating a position where a touch input is performed, and outputs the data to the processor 81.

Moreover, the display 12 is connected to the processor 81. The processor 81 displays a generated image (e.g., an image generated by performing the above information processing) and/or an externally acquired image on the display 12.

The main body apparatus 2 comprises a codec circuit 87 and speakers (specifically, a left speaker and a right speaker) 88. The codec circuit 87 is connected to the speakers 88 and a sound input/output (I/O) terminal 25 and also connected to the processor 81. The codec circuit 87 is a circuit for controlling an input/output of sound data to and from the speakers 88 and the sound input/output terminal 25.

The main body apparatus 2 comprises a power control section 97 and a battery 98. The power control section 97 is connected to the battery 98 and the processor 81. Moreover, although not shown in Figure 6, the power control section 97 is connected to respective components of the main body apparatus 2 (specifically, components that receive power supplied from the battery 98, the left terminal 17 and the right terminal 21). Based on a command from the processor 81, the power control section 97 controls power supply from the battery 98 to the above-described components.

Moreover, the battery 98 is connected to the lower terminal 27. When an external charging device (e.g., a cradle) is connected to the lower terminal 27, and power is supplied to the main body apparatus 2 via the lower terminal 27, the battery 98 is charged with the supplied power.

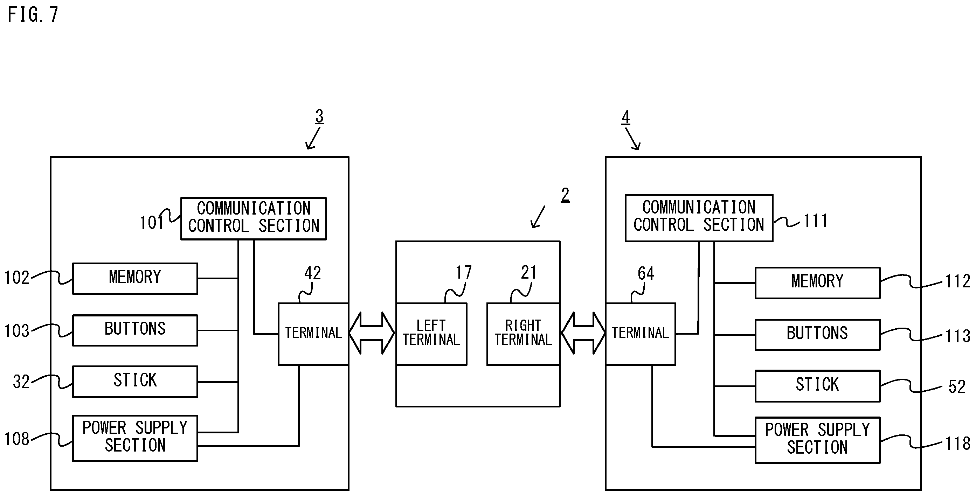

Figure 7 is a block diagram showing examples of internal configurations of the main body apparatus 2, the left controller 3 and the right controller 4. In addition, details of the internal configuration of the main body apparatus 2 are shown in Figure 6 and thus are omitted in Figure 7.

The left controller 3 comprises a communication control section 101 that performs communication with the main body apparatus 2. As shown in Figure 7, the communication control section 101 is connected to components including the terminal 42. In this embodiment, the communication control section 101 can perform communication with the main body apparatus 2 through both wired communication via the terminal 42 and wireless communication not via the terminal 42. The communication control section 101 controls a method of performing communication by the left controller 3 with the main body apparatus 2. That is, when the left controller 3 is attached to the main body apparatus 2, the communication control section 101 performs communication with the main body apparatus 2 via the terminal 42. Moreover, when the left controller 3 is detached from the main body apparatus 2, the communication control section 101 performs wireless communication with the main body apparatus 2 (specifically, the controller communication section 83). The wireless communication between the communication control section 101 and the controller communication section 83 is performed in accordance with Bluetooth (registered trademark) standard, for example.

Moreover, the left controller 3 comprises a memory 102 such as a flash memory. The communication control section 101 is constituted by a microcomputer (also referred to as a microprocessor), for example, and executes firmware stored in the memory 102, thereby performing various processing.

The left controller 3 comprises buttons 103 (specifically, the buttons 33-39, 43, 44 and 47). Further, the left controller 3 comprises the analog stick (in Figure 7, indicated as "stick") 32. The respective buttons 103 and the analog stick 32 outputs information regarding an operation performed to itself to the communication control section 101 repeatedly at appropriate timings.

The communication control section 101 acquires information regarding an input(s) (specifically, information regarding an operation or the detection results of the sensors) from respective input sections (specifically, the buttons 103, the analog stick 32 and the sensors 104 and 105). The communication control section 101 transmits operation data including the acquired information (or information obtained by performing predetermined processing on the acquired information) to the main body apparatus 2. In addition, the operation data is transmitted repeatedly, once every first predetermined time period. In addition, the interval that the information regarding an input(s) is transmitted from each of the input sections to the main body apparatus 2 may or may not be the same.

The above-described operation data is transmitted to the main body apparatus 2, whereby the main body apparatus 2 can obtain an input(s) provided to the left controller 3. That is, the main body apparatus 2 can determine operations on the buttons 103 and the analog stick 32 based on the operation data.

The left controller 3 comprises a power supply section 108. In this embodiment, the power supply section 108 has a battery and a power control circuit. Although not shown, the power control circuit is connected to the battery and also connected to components of the left controller 3 (specifically, components that receive power supplied from the battery).

As shown in Figure 7, the right controller 4 comprises a communication control section 111 that performs communication with the main body apparatus 2. Moreover, the right controller 4 comprises a memory 112 connected to the communication control section 111. The communication control section 111 is connected to components including the terminal 64. The communication control section 111 and the memory 112 have functions similar to those of the communication control section 101 and the memory 102, respectively, of the left controller 3. Therefore, the communication control section 111 can perform communication with the main body apparatus 2 through both wired communication via the terminal 64 and wireless communication not via the terminal 64 (specifically, communication in conformity with the Bluetooth (registered trademark) standard), and a method of communication to be performed with the main body apparatus 2 is controlled by the right controller 4.

The right controller 4 comprises input sections similar to the input sections of the left controller 3. Specifically, the right controller 4 comprises buttons 113 and the analog stick 52. These input sections have functions similar to those of the input sections of the left controller 3 and operate similarly to the input sections of the left controller 3.

The right controller 4 comprises a power supply section 118. The power supply section 118 has a function similar to the power supply section 108 of the left controller 3, and operates similarly to the power supply section 108.

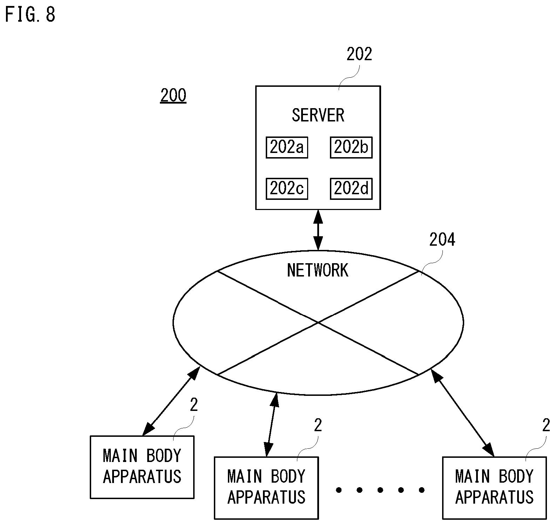

Figure 8 is a view showing a non-limiting example information processing system 200 according to this embodiment. As shown in Figure 8, the information processing system 200 includes a server 202, and the server 202 is communicably connected to a plurality of main body apparatuses 2 via a network 204 such as LAN and/or an internet. However, the main body apparatus 2 may be attached with the left controller 3 and the right controller 4.

The server 202 is a general-purpose server, and comprises circuit components such as a CPU 202a, a RAM 202b, an HDD 202c and a communication unit 202d.

The CPU 202a is a processor that is in charge of overall control of the server 202. The RAM 202b is a main storage of the server 202, and is used as a working area and a buffer area of the CPU 202a.

The HDD 202c is an auxiliary storage of the server 202, and stores programs, such as middleware such as an operating system, a control program of this embodiment, etc., and stores data (ghost data described later) that is managed by the server 202. The control program is a program for storing the ghost data in the HDD 202c, and for distributing the ghost data to the main body apparatus 2 that is a requestor.

However, the ghost data may be stored in a database to which the server 202 is communicably connected directly or via the network 204.

The communication unit 202d performs communication through a cable or wirelessly with an external computer, such as the main body apparatus 2 via the network 204.

Although described in detail later, in the information processing system 200 of this embodiment, the server 202 stores the ghost data transmitted from respective main body apparatuses 2 that are communicably connected the server 202 via the network 204 in a database, such as the HDD 202c, and distributes the ghost data requested by each of the main body apparatuses 2 to the main body apparatus 2 that is a requestor.

Next, an outline of the processing performed in the above-described information processing system 200 will be described. In this embodiment, the information processing system 200 performs a virtual minigame within a game application. The virtual minigame is a game that aims improvement in the flexibility of thinking by a player. In this embodiment, a plurality of minigames classified into a plurality of (e.g., five (5)) fields are prepared. As an example, a minigame is a game that a question for improving the flexibility of thinking is to be correctly answered within the time limit. Moreover, in this embodiment, five fields are "memory", "intuition", "analysis", "perception" and "numeral". In the field of the "memory", a plurality of minigames related to a memory power are prepared. In the field of the "intuition", a plurality of minigames related to an intuition power are prepared. In field of the "analysis", a plurality of minigames related to an analysis power are prepared. In the field of the "perception", a plurality of minigames related to a perception power are prepared. In the field of the "numeral", a plurality of minigames related to a magnitude of numerals, an order or a calculation are prepared.

However, a content of a game performed in the information processing system 200 may be arbitrary, and may be games of genres other than the above-described minigame (e.g., a puzzle game, a racing game, an action game, etc.).

In the game application of this embodiment, it is possible to perform a game in two types of game modes, a single-play mode and a multi-play mode. A user (also called player) of the main body apparatus 2 can play a minigame in either the single-play mode or the multi-play mode.

The single-play mode is a mode that a human player performs a game alone. In the single-play mode, it is possible to perform a minigame in three (3) types of sub-game modes, "individual minigame play", "ghost battle" and "comprehensive test" in this embodiment.

In the "individual minigame play", a human player plays a minigame alone and raises an experience value or a level of the player in the minigame played.

In the "ghost battle", a human player plays a minigame to perform a battle against a ghost. In this specification, the ghost means a player (or a player character of its player) that played a minigame in the game application of this embodiment in the past, and more specifically, a player (or a player character of its player) that plays a minigame according to play data described later, that is, reproduces a past play content on that minigame.
Here, the "player" is a human player, and means a player using the main body apparatus 2 and a player using a further main body apparatus 2 (i.e., a further player).

That is, the "ghost battle" is a mode that the player plays a minigame to battle against the player or the further player that played the minigame in the past (i.e., the ghost) asynchronously or non-simultaneously by using the past play data of the player or the further player.

In the "comprehensive test", a human player plays alone one (1) minigame for each of five (5) fields, and a score of the player is measured for each field.

Moreover, the multi-play mode is a mode that a human player plays a game synchronously or simultaneously with a further human player(s). In the multi-play mode, two or more human players respectively play a minigame to battle against each other, or play a minigame in cooperation with each other.

A main menu screen of a game application of this embodiment is a game image for selecting the single-play mode or multi-play mode, and when a program of the game application is executed, at first, the game image is displayed on a stationary monitor (e.g., television monitor) or on the display 12.

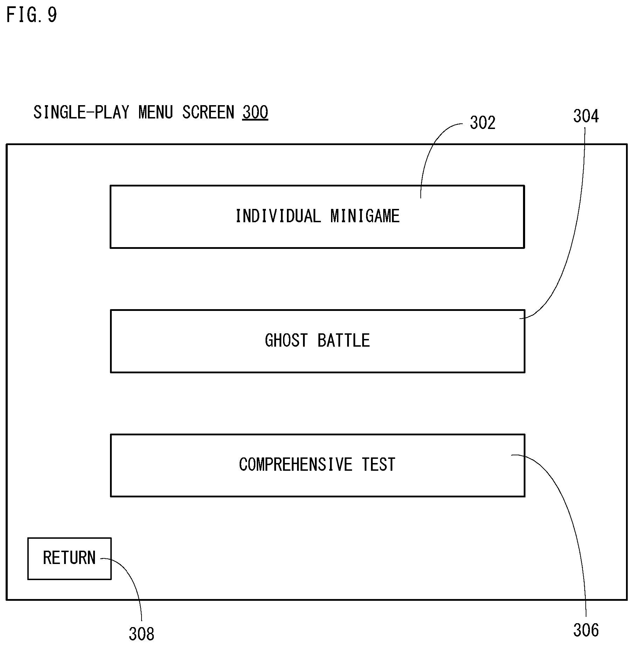

When the single-play mode is selected in the main menu screen, after a player is selected in a player selection screen, a single-play menu screen 300 is displayed on the stationary monitor or the display 12. However, a player is selected from one or more users registered in the main body apparatus 2, or from users not registered in the main body apparatus 2. The same is applied to the multi-play mode described later. Figure 9 is a view showing a non-limiting example single-play menu screen 300 of this embodiment. The single-play menu screen 300 is a game image for selecting any one of three types of sub-game modes, that is, the "individual minigame play", the "ghost battle" and the "comprehensive test".

As described above, when the main body apparatus 2 is attached to the cradle, the main body apparatus 2 outputs data (e.g., display image data and sound data) to the stationary monitor via the cradle. There are a case where the main body apparatus 2 is attached to the cradle in a state where the left controller 3 and the right controller 4 are attached to the main body apparatus 2 and a case where the main body apparatus 2 is attached to the cradle in a state where the left controller 3 and the right controller 4 are detached from the main body apparatus 2. In the following, a state where the main body apparatus 2 is attached to the cradle is called a television mode (hereinafter, referred to as "TV mode").

In this TV mode, when the main body apparatus 2 is attached to the cradle in a state where the left controller 3 and the right controller 4 are attached to the main body apparatus 2, it is possible to use a further controller. However, the further controller is a controller having the same functions as those of the left controller 3 or the right controller 4, or is a controller having the same functions as those of both the left controller 3 and the right controller 4. Moreover, when the main body apparatus 2 is attached to the cradle in a state where the left controller 3 and the right controller 4 are detached from the main body apparatus 2, it is possible to use a further controller in addition to the left controller 3 and the right controller 4.

Moreover, the game system 1 may be used in a state where the left controller 3 and the right controller 4 are attached to the main body apparatus 2 without attaching the main body apparatus 2 to the cradle (hereinafter, referred to as "portable mode"). Furthermore, the game system 1 may be used in a state where the left controller 3 and the right controller 4 are detached from the main body apparatus 2 without attaching the main body apparatus 2 to the cradle (hereinafter, referred to as "table mode"). In the portable mode and the table mode, the main body apparatus 2 outputs display image data to the display 12, and outputs sound data to the sound input/output terminal 25 or the speaker 88 (hereinafter, simply referred to as "speaker 88") via the codec circuit 87.

In the table mode, it is possible to use a further controller instead the left controller 3 and the right controller 4, or in addition to the left controller 3 and right controller 4.

It is determined at least at the time of start of the game application whether the game system 1 is used in any one of the TV mode, the portable mode and the table mode (hereinafter, may be referred to as "use mode"). However, a function to determine the use mode is provided on the main body apparatus 2.

Moreover, although a case where the left controller 3 and the right controller 4 are used will be described in the following, as described above, a further controller may be used when the game system 1 is used in the TV mode or the table mode.

As shown in Figure 9, four (4) icons (or button images) 302, 304, 306 and 308 are provided in the single-play menu screen 300. The icon 302 is provided in order to select the "individual minigame play" that is a first sub-game mode in the single-play mode. The icon 304 is provided in order to select the "ghost battle" that is a second sub-game mode in the single-play mode. The icon 306 is provided in order to select the "comprehensive test" that is a third sub-game mode in the single-play mode. The icon 308 is provided in order to return to the last screen, i.e., main menu screen.

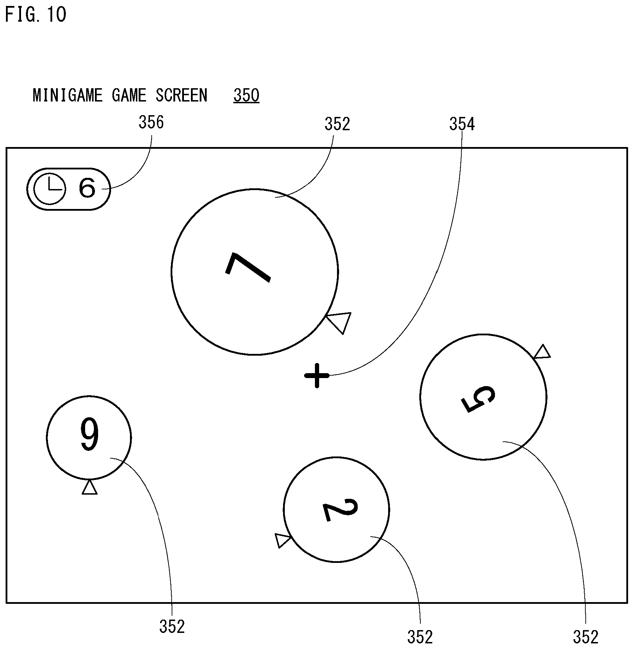

When the icon 302 is turned on, the "individual minigame play" is selected, and a screen for selecting a minigame to play is displayed on the stationary monitor or the display 12. When the player selects a minigame, the selected minigame is started. Figure 10 is a view showing a non-limiting example game screen 350 of a minigame that the human player plays alone. In the game screen 350 shown in Figure 10, a plurality of balloon objects 352 having different sizes are displayed, and different numerals are indicated in the balloon objects 352, respectively. Moreover, a cursor object 354 is displayed in the center of the game screen 350. Furthermore, a timer image 356 is displayed in the left upper portion of the game screen 350. The timer image 356 includes an elliptical frame image, and within this frame image, a clock image and a numeral image representing the number of seconds remaining are included.

In the minigame to be played on the game screen 350 shown in Figure 10, a predetermined number (e.g., ten (10)) of questions are given in order, and the player breaks the balloon objects 352 in ascending order of the numerals in each question. The minigame is ended when the player answers all the questions.

If the player breaks all the balloon objects 352 displayed in the game screen 350, the current question is answered correctly, and a game screen 350 for a next question is displayed. As an example, whenever the player answers a question correctly, a score is added, and the shorter the time spent to answer the question correctly, the larger the score to be added. That is, the minigame in the game application of this embodiment is a game that aims not only for accuracy but also for a speed.

Moreover, before a player breaks all the balloon objects 352 in the current question, when a time limit is exceeded, or the balloon object 352 is broken while the order is mistaken, it becomes an incorrect answer at the current question, and a game screen 350 for a next question is displayed.

In this embodiment, the time limit is individually set for each question, and thus, it is determined whether the time limit is exceeded for each question. This is an example, and the time limit may be individually set for each minigame and the time limit may be increased slightly (two to three (2-3) seconds) when the question is answered correctly. Moreover, the time limit may be set for each individual minigame rather than for each question, and the number of questions answered correctly within the time limit may be evaluated.

When breaking the balloon object 352, the player moves the cursor object 354 so as to select (designate) the balloon object 352 that the player wishes to break and it is decided to break the balloon object 352 in a state where the balloon object 352 is selected by the cursor object 354.

Specifically, when the player uses both the left controller 3 and the right controller 4 in the portable mode, the table mode or the TV mode, the player operates the analog stick 32 to move the cursor object 354 up to a position overlapping the balloon object 352 to break, thereby selecting the balloon object 352. Moreover, the player decides to break the balloon object 352 by operating the A button in a state where the cursor object 354 is overlapping the balloon object 352.

However, by making an initial position of the cursor object 354 at the time of giving a question be a position overlapping any one of the balloon objects 352, and then, the cursor object 354 may be moved to a position overlapping the balloon object 352 located in a direction that the analog stick 32 is operated.

Moreover, in the table mode or the TV mode, it is possible to use the left controller 3 or the right controller 4. In a case where only the left controller 3 is used, the cursor object 354 is moved when the analog stick 32 is operated, and it is decided to break the balloon object 352 being selected when the down direction button 34. In a case where only the right controller 4 is used, the cursor object 354 is moved when the analog stick 52 is operated, and it is decided to break the balloon object 352 being selected when the X button 55. The same is applied to the following, in this specification.

Moreover, since the main body apparatus 2 is provided with the touch panel 13, by touching the balloon object 352 to break in the game screen 350, the player can also decide to break the balloon object 352 at the same time when the balloon object 352 is selected.

That is, in this embodiment, when playing a minigame, except for a case where a touch operation cannot be performed and some exceptions, the operation can be performed by the left controller 3 and the right controller 4, and the operation can also be performed by the touch panel 13.

In the above-described TV mode, there is a state where the main body apparatus 2 is attached to the cradle and thus the player cannot operate the touch panel 13 of the main body apparatus 2, and this state corresponds to the state where the touch panel 13 cannot be operated. Moreover, as the above-described some exceptions, there tends to be a very large difference in score between operations with the left controller 3 and/or the right controller 4 and operations with the touch panel 13 in some minigames, and therefore, as for such some minigames, two types of games are prepared, one of which is a game operated by the left controller 3 and/or the right controller 4 (for convenience of explanation, may be described as "only button operation"), and the other is a game operated by only the touch panel 13 (for convenience of explanation, may be described as "only touch operation"). Therefore, as for the some minigames, before starting the minigame, the player selects one of the two types. Therefore, as for the some minigames, the score is managed separately between a case of playing with only a button operation and a case of playing with only a touch operation.

In addition, in the portable mode and the table mode, the touch panel 13 can be used.

Moreover, in the game application of this embodiment, at every time that the player plays a minigame, play data is stored. Here, the play data is data that indicates changes of the operation input by the player in a time period form a start to an end for each question in a minigame. In this embodiment, a content of the operation input is written in correspondence to the time when the player performs the operation input (i.e., the elapsed time from the start of the current question). The content of the operation input includes a kind of an operation button operated, and a value of a direction input by the operation button or the analog stick or a touch position. Moreover, a touch flag is added to the play data. The touch flag is a flag for determining whether an operation is performed using the touch panel 13 when playing a minigame. If an operation is performed using the touch panel 13 even once, the touch flag is turned on, and the touch flag is turned off when an operation is performed never using the touch panel 13.

However, as the play data, a content of processing performed according to an operation input may be written instead of the content of the operation input. The content of performed processing is movement, selection and decision of an object. In the minigame shown in Figure 10, the content of processing is movement (or positional coordinate after movement) of the cursor object 354, selection of the balloon object 352 and decision of breaking the balloon object 352.

Furthermore, in the virtual game of this embodiment, when the player plays a minigame and the score that is a result of the play updates the highest score, ghost data is generated. In this embodiment, the ghost data is data for a ghost and includes data of a player name, a field name, a minigame name, play data, a score and day and time of the play.

The player name is a name of a player that the ghost data is generated. Although the name of the player is information for identifying a player individually, when use of the same player name between players is permitted, inherent identification information different from the player name is included in the ghost data.

The field name is a name of a field to which a minigame that is played when the play data included in the ghost data is generated belongs. The minigame name is a name of a minigame that is played when the play data included in the ghost data is generated. However, further identification information for identifying a minigame may be written instead of the minigame name. The play data is play data when the highest score of the minigame played is updated. The score is a score when the highest score of the minigame played is updated. The day and time of play is day and time that a minigame that the highest score is updated, and is, for example, the day and time of a start of play start or an end of play.

In addition, other information such as the nationality of a player and an icon image of a player may be included in the ghost data.

The ghost data can be transmitted (i.e., uploaded) to the server 202 according to an operation of the player to be registered in the server 202. When receiving the ghost data from the main body apparatus 2 communicably connected, the server 202 determines whether the ghost data of the player transmitting the ghost data is to be registered for the first time. Specifically, the server 202 determines whether identification information (hereinafter, referred to as "ghost ID") as a ghost is assigned to the player of the player name included in the ghost data.

If the ghost ID is not assigned to the player, the server 202 issues a ghost ID to be assigned to the player, and stores the ghost data received in the HDD 202c in association with the ghost ID. Moreover, when issuing the ghost ID, the server 202 notifies the issued ghost ID to the main body apparatus 2 that is a transmission source of the ghost data.

However, identification information for the ghost data (hereinafter, referred to as "ghost data ID") is assigned to the ghost data, and this ghost data ID is associated with the ghost ID. Therefore, multiple pieces of ghost data registered by the player are individually identifiable.

Since the player determines whether the ghost data is to be registered in the server 202 in this embodiment, instead of generating the ghost data before the player determines that the ghost data is to be registered in the server 202, the ghost data may be generated after the highest score is updated and further the player determines that the ghost data is to be registered in the server 202.

However, the ghost data may be automatically transmitted to the server 202 and registered in the server 202 without an operation by the player.

In addition, the player can notify the ghost ID to other players by posting the ghost ID on SNS, sending a message containing the ghost ID from the main body apparatus 2 to the main body apparatus 2 of a friend player described later, or sending an email containing the ghost ID to an acquaintance or friend or sending a message containing the ghost ID with a short message service to an acquaintance or friend. As described later, using the ghost ID, the player or a further player that learns the ghost ID on SNS etc. can perform a battle against a ghost of the ghost data associated with the ghost ID.

Moreover, when the icon 304 is turned on in the single-play menu screen 300, the "ghost battle" is selected, and respective screens for selecting the type of the ghost to battle and for selecting the ghost to battle are sequentially displayed on the stationary monitor or the display 12. Selection of the type of the ghost and selection of the ghost will be described later in detail.

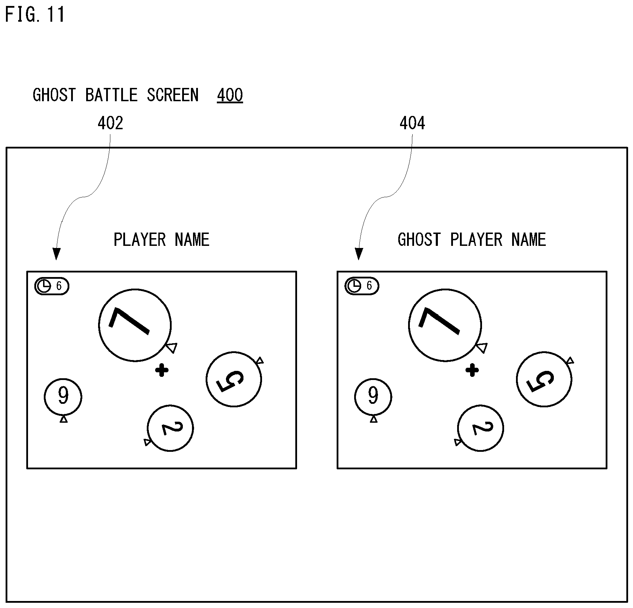

If the player selects both a type of the ghost to battle and a ghost to battle, a minigame of the minigame name included in the ghost data of the ghost to battle is started. Figure 11 is a view showing a non-limiting example ghost battle screen 400. The ghost battle screen 400 includes a game screen 402 for the player and a game screen 404 for the ghost.

The game screen 402 for the player and the game screen 404 for the ghost are game screens of a minigame of the minigame name included in the ghost data. In playing a battle against the ghost, the player and the ghost answer a question, respectively. That is, the player and the ghost respectively play a minigame similar to a case of playing a minigame of the individual minigame play. However, the ghost plays the minigame according to the play data included in the ghost data. That is, in the ghost battle, since the ghost plays the minigame according to the play data when the player or other players played a minigame in the past, the player plays the battle against the ghost virtually. As described above, the player plays the battle against the ghost asynchronously or non-simultaneously. Scores of the player and the ghost are individually added similar to a case of playing a minigame of the individual minigame play. Victory or defeat is determined according to the magnitude of the score of the player and the score of the ghost after answering all the questions.

In addition, in this embodiment, in the ghost battle, even when the score of the player updates the highest score, no ghost data is generated and registered in the server 202. However, in also a case where the score of the player updates the highest score in the ghost battle, the ghost data may be generated and registered in the server 202 according to an operation of the player.

Moreover, when the icon 306 is turned on in the single-player menu screen 300, playing a minigame by the "comprehensive test" is selected, and a game of the comprehensive test for the player to know the flexibility of the current thinking is performed. In the game of the comprehensive test, a minigame is selected one by one from respective fields, the selected minigames are played in order, and the flexibility of the current thinking is measured (or calculated) from a result of the play and indicated for each field.

As an example, a minigame is selected in each field according for a level of the player. However, a minigame may be selected at random. A minigame selected for each field is a game that aims at accuracy and a speed similar to a minigame described using Figure 10. The larger the number of correct answers in a plurality of (e.g., 10 (ten)) questions in the minigame and the shorter the time spent correctly answering the questions, the higher score is added. Moreover, similar to a case of the minigame in the individual minigame play, when the time limit is exceeded while answering a question or a question is incorrectly answered, the player becomes incorrect answer for the question. As an example, after playing all the minigames for all the fields, the score of the minigame for each field is indicated to the player.

Moreover, in also a case of the game of the comprehensive test, as for a minigame that the player updates the own highest score in each field, the ghost data is generated and can be registered in the server 202 according to an operation of the player.

Moreover, when the multi-play mode is selected on the main menu screen, the number of players is selected in a screen for selecting the number of players, respective players corresponding to the number of players are selected in a screen for selecting a player, and a minigame is selected in a screen for selecting a minigame to play, and thereafter, a game screen of the selected minigame is displayed on the stationary monitor or the display 12. Moreover, when a player is selected, the controller to be used is registered for each player.

In the multi-play mode, when a plurality of players play a battle against each other, a game screen for each player is displayed, and each player answers a question, and a ranking is determined for each question. The shorter the time spent correctly answering a question, the higher place is obtainable. Therefore, the higher place of the player, the larger score is added. Similar to the minigame in the individual minigame play, when the time limit is exceeded while answering a question or a question is incorrectly answered, the player becomes incorrect answer for the question. If the plays of all the players are ended, places of them in the minigame are determined according to final scores.

Although a detailed description is omitted, even when the same minigame is to be played, the player can play by selecting a different level. Therefore, it is possible to eliminate or reduce the difference in experience value or play level between players, and enjoy the battle.

Moreover, also in a case where a plurality of players play a battle against each other with, as for the player that updates the own highest score, the ghost data is generated and can be registered in the server 202 according to an operation of the player.

Moreover, when a plurality of players play a minigame in cooperation with each other, a single game screen of the minigame is displayed. The plurality of players perform operation in order, and when answering a question correctly, scores are added to the players, respectively. If the time limit is exceeded while answering a question or a question is incorrectly answered, the player becomes incorrect answer for the question.

In addition, in this embodiment, when a plurality of players play a minigame in cooperation with each other, no ghost data is generated.

Here, a selection method of a ghost of this embodiment is described. The player can select one of a worldwide ghost, a friend ghost, a family ghost and a specific ghost.

The worldwide ghost is a player that played a minigame in the game application of this embodiment using the main body apparatus 2 connected to the network 204, and includes a player of not only domestic but also an overseas. Moreover, the worldwide ghost includes not only further players using further main body apparatuses 2 but also the player himself/herself using the main body apparatus 2.

The friend ghost is a so-called friend player. The friend player means a player that is registered in the main body apparatus 2 as a friend. The player registered in the main body apparatus 2 as a friend means a player that his/her inherent identification information for identifying the player (hereinafter, referred to as "friend identification information") and connection information for establishing a connection state through communication with the further main body apparatus 2 used by the player are registered in the main body apparatus 2. However, the friend identification information and the connection information may be managed by the server 202.

Moreover, a friend is a relationship established based on mutual consent between players. A friend is established when one player submits a friend request requesting establishment of a friend to the other player, and the other player approves the friend request. Alternatively, a friend is established when both players submit a friend request to each other. The friend players can share information mutually, such as transmitting and receiving data using their respective main body apparatuses 2.

The family ghost is a family player. The family player means a player registered as a user that uses the main body apparatus 2 and played a minigame in the game application of this embodiment in the past.

The specific ghost is a ghost that is specified by the ghost ID. Therefore, the specific ghost may be the same as the ghost included in the worldwide ghost, the friend ghost or the family ghost.

As described above, in the ghost battle, the player and the ghost play a minigame, respectively. Moreover, when playing a minigame, an operation can be performed by the left controller 3 and/or the right controller 4, and also performed by the touch panel 13.

If a minigame is played with operating the left controller 3 and/or the right controller 4, in an example shown in Figure 10, the player selects the balloon object 352 with moving cursor object 354, and then, decides to break the selected balloon object 352. That is, the player performs operations for selection and decision. In contrast, when an operation is performed with the touch panel 13, the player selects the balloon object 352 and at the same time decides to break the balloon object 352. That is, selection and decision are performed with an operation once. Therefore, the operation by the touch panel 13 takes shorter time spent to get a correct answer, and a higher score is added compared with an operation by the left controller 3 and/or the right controller 4. That is, the operation by the touch panel 13 is more advantageous than the operation by the left controller 3 and/or the right controller 4. The same can also be applied to when the touch panel 13 is operated in at least one question in the minigame or operated temporarily during some the question in the minigame.

Moreover, a reason why the operation with the touch panel 13 can answer with shorter time than the operation by the left controller 3 and/or the right controller 4 is that the touch panel operation generally takes less time for the selection operation. As an example, when operating a numeral key of a virtual electronic calculator by the touch panel 13, it is enough to move a finger toward the numeral key to be depressed, whereas when operating the left controller 3 and/or the right controller 4, it is necessary to move a cursor pointing to the numeral key to be depressed one by one from the current cursor position.

Accordingly, in this embodiment, when the player is playing in the TV mode, it is not possible to operate the touch panel 13, and therefore, a ghost operated by the touch panel 13 is not selected as an opponent. Thus, playing a battle against a ghost in a situation that the player is disadvantageous is avoided in advance.

Moreover, since there is no operation of movement of the cursor when an operation is performed by the touch panel 13, when the player plays a battle against the ghost that is operated by the touch panel 13, it seems to the player that the ghost is playing a minigame without moving the cursor, and therefore, when the player is playing with a button operation accompanying moving the cursor, it may give an impression that it is unfair. However, it is avoidable by performing the above-described selection to give such an impression to a player.

Furthermore, if the ghost having been operated by the touch panel 13 is made to be selected as an opponent when the player is playing in the TV mode, in order to more quickly operate, the player may want to stop the TV mode and change to a further play mode that can be operated using the touch panel 13, but such a change is troublesome for the player. By performing the selection as described above, it is possible to avoid such a troublesome for the player.

However, when playing a battle against the friend ghost or the family ghost, even when the player is playing in the TV mode, it is possible to select a ghost operated by the touch panel 13as an opponent. A reason of this is as follow: Since the number of the friend ghosts and the family ghosts is very small compared with the number of the worldwide ghosts, when the friend ghost or the family ghost that is operated by the touch panel 13 cannot be selected as an opponent, the number of the ghosts to be selected becomes very small, and accordingly, it becomes impossible to play a battle against desired friend ghost or family ghosts. Moreover, a further reason is that the number of the friend ghosts and the family ghosts is small, and therefore, when the friend ghost or family ghost operated by the touch panel 13 is excluded from opponent candidates, the player can easily notice the exclusion.

That is, when playing a battle against a ghost about a player having a predetermined relationship (equivalent to "second relationship") such as a friend player or a family player, regardless of whether the player is operating the touch panel 13, the ghost of the player having the second relationship can be selected.

Therefore, in this embodiment, when selecting the ghost battle, it is determined whether playing a battle against the worldwide ghost is selected. When playing a battle against the worldwide ghost is selected, it is further determined whether the use mode is the TV mode. When the use mode is the TV mode, the server 202 is requested to select a ghost operated by the left controller 3 and/or the right controller 4 without being operated by the touch panel 13 (i.e., a ghost of the ghost data including the play data that the touch flag is turned off). That is, a ghost operated by the touch panel 13 is not selected.

When playing a battle against the worldwide ghost is not selected, that is, when playing a battle against the friend ghost, the family ghost or the specific ghost is selected, regardless of the use mode, the server 202 is requested to select the friend ghost, the family ghost or the specific ghost.

Moreover, when playing a battle against the worldwide ghost is selected and the use mode is the portable mode or the table mode, it is determined whether the player performed a touch operation in the minigame immediately before, and when the touch operation is not performed, the server 202 is requested to select the ghost of the ghost data including the play data that the touch flag is turned off (hereinafter, simply referred to as "ghost having turned-off touch flag").

That is, irrespective of a minigame is the same minigame as played, for the player seems not to perform the touch operation, it is requested to select a ghost having turned-off touch flag in order to avoid that the player becomes a disadvantageous situation.

Moreover, when the player plays a battle against a ghost about a player that has a further predetermined relationship (equivalent to "first relationship") such as the player himself/herself or a player using a further main body apparatus 2, such as the worldwide ghost, a ghost about a player having the first relationship is selected based on not only the use mode of the game system 1 but also whether the player operates the touch panel 13.

However, this is an example, it is determined whether a touch operation is performed in any minigame until the minigame immediately before after starting the execution of the program of the game application this time, and the server 202 may be requested to select the ghost having turned-off touch flag if the touch operation is not performed in any minigame. Alternately, it may be determined whether the touch operation is performed in a plurality of minigames immediately before.

Thus, as for the use mode that a touch operation is performable, it is further requested to select a ghost in consideration of an operation method of the player. That is, it is determined, based on a state related to a play of the player such as the use mode of the game system 1 and the operation method of the player (hereinafter, referred to as "play state"), whether a ghost having performed a touch operation even once is to be selected.

In this embodiment, although a ghost that the touch operation is performed is not selected for the player that cannot perform the touch operation or the player that does not perform the touch operation, it does not need to be limited to this. For the player that cannot perform the touch operation or the player that does not performed the touch operation, the server 202 may be requested to preferentially select a ghost having turned-off touch flag.

Even in this way, it is possible to select an appropriate ghost corresponding to the play state of the player. Therefore, since the player that cannot perform the touch operation or the player that does not performed the touch operation can select a ghost having turned-off touch flag, it is possible to avoid a disadvantageous situation.

Moreover, ghosts as for some minigames that have been selected in advance by the ghost player to play with only a touch operation are not selected in the TV mode, but may be selected in the portable mode or the table mode. When playing a battle against the ghosts as for some minigames that have been selected to play with only a touch operation, it is permitted to perform only the touch operation. Specifically, the operation data of the left controller 3 and the right controller 4 are made to be invalid, and the game control processing (step S77 described later) is performed according to the operation data of the touch input from the touch panel 13.

Moreover, ghosts as for some minigames that have been selected in advance by the ghost player to play with only a button operation are may be selected in any of the TV mode, the portable mode and the table mode. When playing a battle against the ghosts as for some minigames that have been selected to play with only a button operation, it is permitted to perform both the button operation and a touch operation. Specifically, the game control processing (step S77 described later) is performed according to the operation data of the left controller 3 and/or the right controller 4 or the operation data of the touch input from the touch panel 13.

That is, as for some minigames, there is a tendency for very large difference in score between a case of operating with the left controller 3 and/or the right controller 4 and a case of operating with the touch panel 13, and therefore, when the player designates whether to play with only a button operation or with only a touch operation, the play data at that time is saved as the ghost data.

Moreover, when playing a battle against the ghost that is designated to be operated by only a touch operation, the player can only perform the touch operation. That is, using only the touch panel 13 is permitted. When playing a battle against the ghost that is designated to be operated by only a button operation, the player can perform the button operation and the touch operation. That is, using the left controller 3 and/or the right controller 4 and using the touch panel 13 are permitted. Thus, it is prevented the player that often performs a touch operation from being forced to perform a button operation.

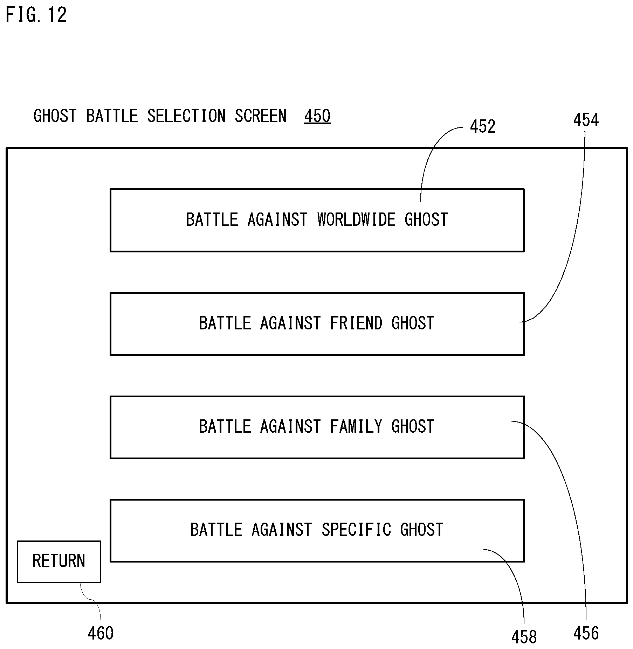

As described above, when the icon 304 is turned on in the single-play menu screen 300, a ghost battle selection screen 450 as shown in Figure 12 is displayed on the stationary monitor or the display 12. Five (5) icons (or button images) 452, 454, 456, 458 and 460 are provided in the ghost battle selection screen 450. The icon 452 is provided in order to play a battle against a worldwide ghost. The icon 454 is provided in order to play a battle against a friend ghost. The icon 456 is provided in order to play a battle against a family ghost. The icon 458 is provided in order to play a battle against a specific ghost. The icon 460 is provided in order to return to the main menu.

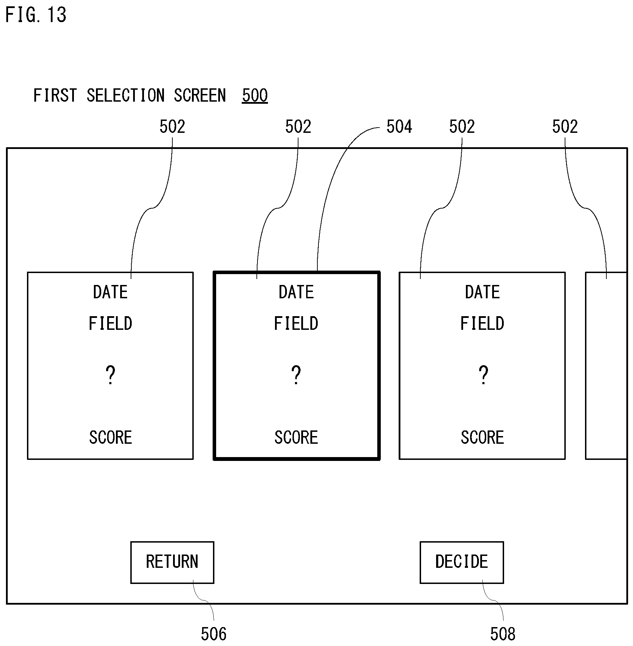

If the icon 452 is turned on, as shown in Figure 13, a selection screen 500 for selecting the worldwide ghost to play a battle (for convenience of description, referred to as "first selection screen") is displayed on the stationary monitor or the display 12.

As shown in Figure 13, a plurality of card objects 502, a cursor object 504, an icon (button image) 506 and an icon 508 are provided in the first selection screen 500.

The card object 502 is an object for selecting the ghost to play a battle, in which at least a part of information on the ghost (here, the worldwide ghost) (hereinafter, referred to as "ghost information") is indicated. In this embodiment, the ghost information is information except the play data out of the information included in the ghost data, and specifically, is information including a date, a field name, a minigame name, a player name and score.

When displaying the first selection screen 500, the main body apparatus 2 requests the server 202 to transmit the information on the worldwide ghost. However, in a case where the use mode is the TV mode, the main body apparatus 2 requests the server 202 to select the ghost that is operated by the left controller 3 and/or the right controller 4 without being operated by the touch panel 13. Moreover, in a case where the use mode is the portable mode or the table mode, the main body apparatus 2 determines whether the player performed the touch operation in the minigame immediately before, and if no touch operation is performed, the server 202 is requested to select the ghost operated by the left controller 3 and/or the right controller 4 without being operated by the touch panel 13.

The server 202 selects the predetermined number pieces (e.g., seven (7) pieces) of the ghost data from multiple pieces of ghost data that the server 202 manages in response to a request for transmitting the ghost information from the main body apparatus 2. However, when the main body apparatus 2 requests to select the ghost operated by the left controller 3 and/or the right controller 4 without being operated by the touch panel 13, the server 202 selects the ghost data that the touch flag is turned off. On the other hand, when the main body apparatus 2 does not request to select the ghost operated by the left controller 3 and/or the right controller 4 without being operated by the touch panel 13, the server 202 selects the ghost data regardless of the touch flag. Furthermore, when selecting the ghost, the server 202 preferentially selects the ghost with newer date. This is an example, and a ghost may be selected at random, or a ghost having the same strength as own strength may be selected.

When selecting the seven (7) pieces of the ghost data, the server 202 transmits the ghost information included in each piece of the ghost data to the main body apparatus 2 that is a requestor. Therefore, the main body apparatus 2 displays the first selection screen 500 on the stationary monitor or the display 12 using the ghost information received from the server 202. However, the ghost data ID is added to the ghost information.

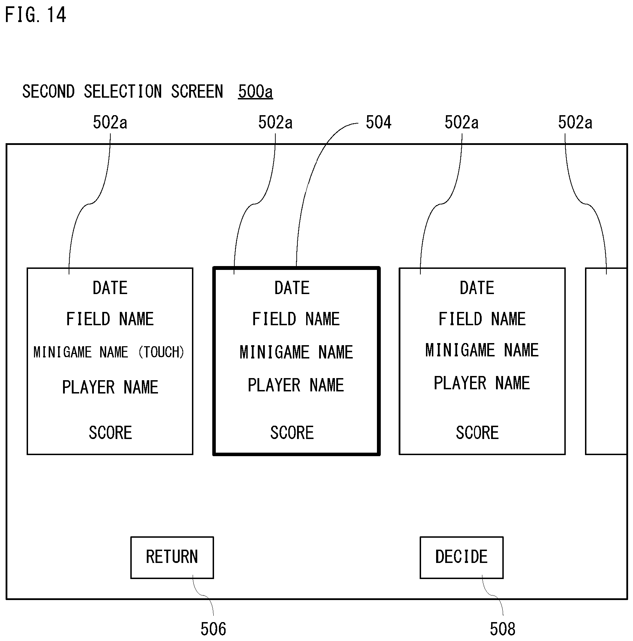

In addition, in Figure 13, the ghost information is omitted in the right end card object 502. Moreover, the card object 502 not included in the first selection screen 500 can be moved to the right or the left to be displayed by moving the cursor object 504 to the left or the right. The same is applied to a second selection screen 500a (see Figure 14) described later.

Moreover, although a detailed description is omitted, if the player instructs replacement of the ghost when the first selection screen 500 is being displayed, the server 202 newly select seven (7) pieces of the ghost data to transmit the ghost information of each selected ghost data to the main body apparatus 2 that is a requestor. However, when the ghost data selected previously is the ghost data that the touch flag is turned off, ghost data to be newly selected is also ghost data that the touch flag is turned off. Therefore, a card object 502 indicating further ghost information that is newly selected is displayed on the first selection screen 500. That is, the first selection screen 500 is updated.

Moreover, in the first screen 500, that is, when the worldwide ghost is to be selected, in the card object 502, there are indicated the date, a field name, a question mark (?) and an accumulated score.

The date is a date included in the ghost data, and year, month and day are indicated. The field name is a name of the field into which a minigame played when storing the play data registered as the ghost data is classified, and "memory", "intuition", "analysis", "perception", or "numeral" is indicated in this embodiment.

The question mark (?) is indicated instead of the minigame name and the player name. When selecting a worldwide ghost, by hiding the minigame name, it is possible to give the player an enjoyment that the player does not know what kind of minigame intended to play until they play. Moreover, by displaying the minigame name first, it is possible to prevent the minigame that the player is not good at from being avoided. On the other hand, in a battle against the friend ghost or the family ghost described later, the minigame name is displayed from the beginning because the enjoyment of playing against such ghosts is greater than winning or losing.

The score is a score included in the ghost data. However, instead of the score, the strength or level of the player may be indicated.

The player selects desired one card object 502 with reference to the ghost information indicated to one or more card objects 502. That is, the player selects the ghost. Specifically, the player selects (or designates) the desired card object 502 by moving the cursor object 504, and decides a ghost indicated by the selected card object 502 as an opponent by turning on the icon 508. However, in the TV mode, when the player uses the left controller 3 and the right controller 4, the card object 502 is selected by operating the analog stick 32 and the icon 508 is turned on by depressing the A button 53. Moreover, in the portable mode or the table mode, the icon 508 is turned on by depressing the A button 53 or by touching the icon 508. Alternately, by touching the desired card object 502, at the same time that the desired card object 502 is selected (or designated), the ghost indicated by the card object 502 may be decided as the opponent.

When the ghost as the opponent is decided, instead of the question mark(?) on the selected card object 502, the minigame name and the player name are indicated. That is, before playing a minigame with the ghost, it is possible to know the minigame to battle and the ghost to battle, that is, the player.

Moreover, if the ghost of the opponent is decided in the first selection screen 500, the main body apparatus 2 requests the server 202 to transmit the ghost data of the decided ghost that is the opponent. However, the ghost data ID of the ghost data is added to the transmission request of the ghost data. The server 202 distributes the ghost data requested from the main body apparatus 2 to the main body apparatus 2 that is a requestor. Accordingly, the main body apparatus 2 that is a requestor acquires the ghost data.

Moreover, if the icon 506 is turned on in the first selection screen 500, the screen is returned to the previous screen. That is, a ghost battle selection screen 450 is displayed on the stationary monitor or the display 12 instead of the first selection screen 500. However, in the TV mode, when the player uses the left controller 3 and the right controller 4, the icon 506 is turned on by turning on the B button 54. Moreover, in the portable mode or the table mode, the icon 506 is turned on by turning on the B button 54 or by touching the icon 506.

However, in the table mode or the TV mode, it is possible to also use the left controller 3 or the right controller 4. When only the left controller 3 is used, the icon 506 is turned on by operating the leftward button 36. Moreover, when only the right controller 4 is used, the icon 506 is turned on by operating the A button 53. Hereinafter, this is the same in this specification.

Moreover, if the icon 454 is turned on in the ghost battle selection screen 450 shown in Figure 12, as shown in Figure 14, a selection screen for selecting a friend ghost to play a battle (for convenience of description, referred to as "second selection screen") 500a is displayed on the stationary monitor or the display 12. Since the second selection screen 500a is almost the same as the first selection screen 500, description will be made on different contents.

Moreover, as shown in Figure 14, a plurality of card objects 502a, a cursor object 504, an icon (button image) 506 and an icon 508 are provided in the second selection screen 500a.

As can be seen by comparing with the first selection screen 500, the second selection screen 500a displays all ghost information on the card object 502a. Because of playing a battle against the friend ghost, knowing in advance who the ghost is makes it easier to select the ghost, and knowing in advance what the minigame is makes enjoyment of playing against a friend larger.

When displaying the second selection screen 500a, the main body apparatus 2 requests the server 202 to transmit the ghost information of the friend ghost. However, when requesting a transmission of the ghost information of the friend ghost, friend identification information on all the friend players registered is also transmitted to the server 202.

The server 202 selects, in response to the transmission request of the ghost information of the friend ghost, the ghost data of the friend ghost out of multiple pieces of ghost data that the server 202 manages, and transmits to the main body apparatus 2 that is a requestor the ghost information added to each of the selected ghost data. However, when the ghost data of the friend ghost is registered seven (7) or more pieces, seven (7) pieces of ghost data with newer dates are selected among all the friend ghosts. Therefore, the main body apparatus 2 displays the second selection screen 500a on the stationary monitor or the display 12 using the ghost information received from the server 202.

However, the friend identification information of each player is stored in the server 202, and the ghost data of the friend ghost may be selected using the stored friend identification information.

Moreover, in a rule of selecting the ghost data, the ghost data may be selected using criteria different from the date.

Moreover, as described above, the card object 502 corresponding to the ghost of a minigame that the player selects in advance to perform only the touch operation indicates performing only the touch operation. In an example shown in Figure 14, a character string "(touch)" is indicated beside the minigame name of the card object 502. However, this is an example, and the character string "(touch)" may be indicated in an upper portion or a lower portion of the card object 502, and further, instead of the character string, a mark indicating that only a touch operation is selected to perform may be written. This is the same as for the card object 502 corresponding to the ghost of a minigame that the player selected so as to perform only a button operation described later.

Although illustration is omitted, the card object 502 corresponding to the ghost of a minigame that the player selects in advance to perform only the button operation indicates performing only the button operation. As an example, as similar to a case of only the touch operation, a character string "(button)" is indicated beside the minigame name of the card object 502.

Indicating the character string "(touch)" or "(button)" beside the minigame name is the same in a family ghost selection screen and a specific ghost selection screen.

In addition, since a minigame name is not displayed in the above-described first selection screen 500, performing only the touch operation or performing only the button operation is also not displayed.

As to other contents, since it is the same as a case of displaying the first selection screen 500, a duplicate description will be omitted.

Furthermore, if the icon 456 is turned on in the ghost battle selection screen 450 shown in Figure 12, a selection screen for selecting the family ghost to play battle (hereinafter, referred to as "family ghost selection screen") is displayed on the stationary monitor or the display 12. This family ghost selection screen is the same as the second selection screen 500a except the contents indicated on one or more card objects are the information on the family ghost.

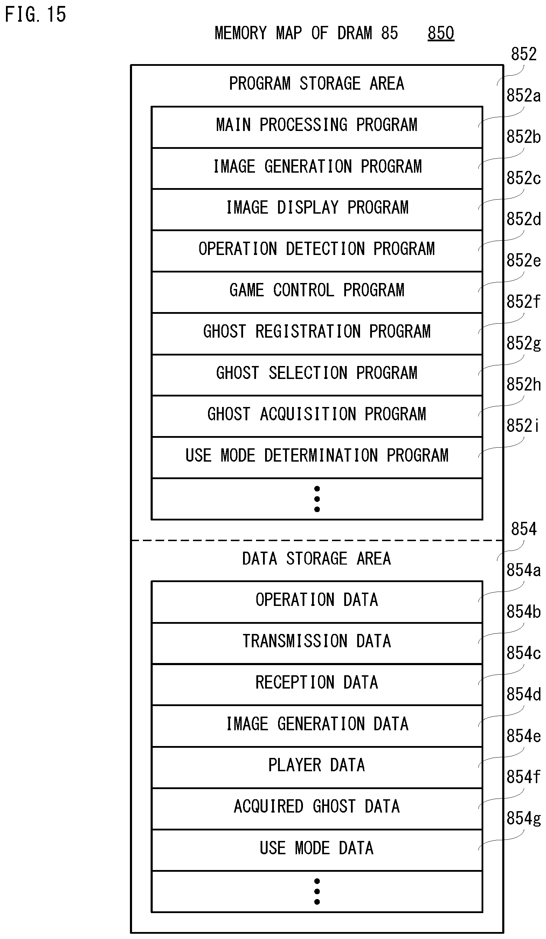

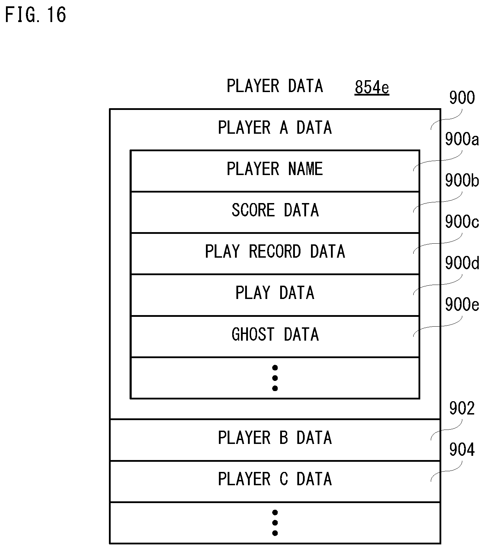

When displaying the family ghost selection screen, the main body apparatus 2 acquires the ghost information of the family ghost from the player data 854e (Figure 15 and Figure 16) stored in the DRAM 85. Therefore, the main body apparatus 2 displays the family ghost selection screen on the stationary monitor or the display 12 using the ghost information acquired.

As to other contents, it is the same as a case of displaying the second selection screen 500a, a duplicate description will be omitted.

However, as similar to the worldwide ghost and the friend ghost, the ghost information of the family ghost may be acquired from the server 202. In this case, the main body apparatus 2 requests the server 202 to transmit the ghost information on the family ghost. Moreover, when requesting transmission of the ghost information on the family ghost, the main body apparatus 2 also transmits the identification information of a family player other than the player selecting the family ghost to the server 202.

Moreover, if the icon 458 is turned on in the ghost battle selection screen 450 shown in Figure 12, specific ghost selection processing is performed. When starting the specific ghost selection processing, a screen for acquiring the ghost information of the specific ghost (hereinafter, referred to as "acquisition screen") is first displayed on the stationary monitor or the display 12.

As described above, the ghost ID is assigned to the player that registers the ghost data in the server 202. Although illustration is omitted, there are provided, in the acquisition screen, with an input field for inputting the ghost ID, an icon (acquisition button) for acquiring (receiving) the ghost information on the specific ghost from the server 202 by transmitting the ghost ID to the server 202 and an icon (return button) for returning to the ghost battle selection screen 450.

However, since the ghost ID is associated with one or more ghost data IDs, one or more pieces of information of the ghost on the specific ghost are acquired from the server 202.

Therefore, if the player inputs the ghost data ID into the input field and turns on the acquisition button, the input ghost data ID is transmitted to the server 202. When receiving the ghost data ID, the server 202 selects the ghost data indicated by the ghost data ID out of the ghost data that the server 202 manages, and transmits the ghost information included in the selected ghost data to the main body apparatus 2 that is a requestor. Therefore, the main body apparatus 2 displays a screen for displaying one or more card objects each indicating the ghost information received from the server 202 (hereinafter, referred to as "specific ghost selection screen") on the stationary monitor or the display 12. Although illustration is omitted, as an example, the specific ghost selection screen is the same as the second selection screen 500a except the contents indicated on one or more card objects are the information on the specific ghost.

The player selects a desired one (1) card object with reference to the ghost information indicated in one or more card objects, and decides a ghost as an opponent. A method of selecting and deciding a ghost is the same as the method described using the first selection screen 500.

When deciding the ghost of the opponent, the main body apparatus 2 requests the server 202 to transmit the ghost data of the decided specific ghost. The server 202 distributes the ghost data requested from the main body apparatus 2 to the main body apparatus 2 that is a requestor. Therefore, the main body apparatus 2 that is a requestor acquires the ghost data.

Moreover, if the player turns on the return button in the specific ghost selection screen, the screen is returned to the previous screen. That is, the ghost battle selection screen 450 is displayed on the stationary monitor or the display 12 instead of the specific ghost selection screen.

Figure 15 is a view showing a non-limiting example memory map 850 of the DRAM 85 shown in Figure 6. As shown in Figure 15, the DRAM 85 includes a program storage area 852 and a data storage area 854. The program storage area 852 is stored with a program of game application (i.e., game program). The game program includes a main processing program 852a, an image generation 852b, an image display program 852c, an operation detection program 852d, a game control program 852e, a ghost registration program 852f, a ghost selection program 852g, a ghost acquisition program 852h, the use mode determination program 852i, etc. However, a function of displaying images such as a game image and a function of determining the use mode of the game system 1 are functions that the main body apparatus 2 is provided with. Therefore, the image display program 852c and the use mode determination program 852i are not included in the game program.

Although a detailed description is omitted, at a proper timing after a power of the main body apparatus 2 is turned on, a part or all of each of the programs 852a-852i is read from the flash memory 84 and/or a storage medium attached to the slot 23 to be stored in the DRAM 85. However, a part or all of each of the programs 852a-852i may be acquired from other computers capable of performing communication with the main body apparatus 2.

The main processing program 852a is a program for executing overall game processing (hereinafter, referred to as "overall processing") of a game application of this embodiment. The image generation program 852b is a program for generating, using image generation data 854d described later, display image data corresponding to various kinds of images such as a game image. The image display program 852c is a program for outputting to a display device the display image data generated according to the image generation program 852b. Therefore, images corresponding to the display image data (i.e., single-play menu screen 300, game screen of minigame 350, ghost battle screen 400, ghost battle selectin screen 450, first selection screen 500, second selectin screen 500a, etc.) are displayed on the display device such as the stationary monitor, the display 12, etc.

The operation detection program 852d is a program for acquiring the operation data 854a from the left controller 3 and/or the right controller 4 or the operation data 854a of the touch panel 13. The game control program 852e is a program for performing, according to operations by one or more players, game control processing of each of a minigame in the individual minigame play, a minigame in the multi-play mode, a minigame in the ghost battle and a minigame in the comprehensive test.

The ghost registration program 852f is a program for registering generated ghost data in the server 202 according to an operation of the player. However, when the ghost data is generated for two or more players, the ghost registration program 852f registers the generated ghost data in the server 202 according to an operation of each of the players.

The ghost selection program 852g is a program for selecting a ghost to play the ghost battle according to an operation of the player.

The ghost acquisition program 852h is a program for acquiring the ghost data distributed from the server 202. However, the family ghost data is acquired from the player data 854e stored in the data storage area 854 of the main body apparatus 2.

The use mode determination program 852i is a program for determining the use mode of the game system 1, and stores or updates the information on the TV mode, the portable mode or the table mode as a result of determination (use mode data 854g described later) to the data storage area 854.

In addition, the program storage area 852 is further stored with a sound output program for outputting a sound such as a BGM, a communication program for performing communication with other apparatuses, a backup program for storing data in a nonvolatile storage medium such as the flash memory 84, etc.

Moreover, the data storage area 854 is stored with the operation data 854a, transmission data 854b, reception data 854c, the image generation data 854d, player data 854e, acquired ghost data 854f, the use mode data 854g, etc.

The operation data 854a is operation data received from the left controller 3 and/or the right controller 4. In this embodiment, when the main body apparatus 2 receives the operation data from both of the left controller 3 and the right controller 4, the main body apparatus 2 stores the operation data 854a while making the left controller 3 and the right controller 4 be identifiable. Moreover, when one or more further controllers are used, the main body apparatus 2 stores the operation data 854a while making the one or more further controllers be identifiable. Moreover, the operation data 854a is touch coordinates data that is input from the touch panel 13.

The transmission data 854b is data to be transmitted to an external computer or a further the main body apparatus 2. As an example, the external computer is the server 202, and the server 202 is sent an instruction requesting transmission of ghost information or an instruction requesting transmission of ghost data. However, information for excluding ghosts operated by the touch panel 13 may be added to the instruction requesting transmission of ghost information.

The reception data 854c is data received from an external computer or a further main body apparatus 2. As an example, the ghost information and the ghost data transmitted from the server 202 are received.

The image generation data 854d is data required for generating the display image data, such as polygon data and texture data. The player data 854e is data for each player that is registered as a player using the main body apparatus 2 and plays the game application of this embodiment. Details of the player data 854e will be described later (see Figure 16).

The acquired ghost data 854f is ghost data for the ghost to battle in the ghost battle. In the ghost battle, the ghost plays a minigame according to the play data included in the acquired ghost data 854f.

The use mode data 854g is information indicating the use mode of the game system 1, and is the information on the TV mode, the portable mode or the table mode determined according to the use mode determination program 854i.

Although illustration is omitted, the data storage area 854 is stored with other data, and is provided with flag(s) and timer(s) (counter(s)).

Figure 16 is a view showing non-limiting example specific contents of the player data 854e shown in Figure 15. The player data 854e includes player A data 900, player B data 902, player C data 904, ---. In an example shown in Figure 16, since specific contents of the player A data 900, the player B data 902 and the player C data 904 are the same, the player A data 900 will be described, and descriptions on the player B data 902 and the player C data 906 will be omitted. As an example, the player A, the player B, the player C, --- are family player and/or friend players.

The player A data 900 includes player name data 900a, score data 900b, play record data 900c, play data 900d, ghost data 900e, etc.

The player name data 900a is data indicating a name of the player A corresponding to the player A data 900. As described above, a player name is information for identifying a player individually, but when using the same player name is permitted between players, inherent identification information different from the player name is included in the player A data 900.

The score data 900b is data on a score of the minigame that the player A is currently playing or has played this time. However, when the game application of the comprehensive test is played, the score data 900b is data on a score of the minigame that is being currently played or has been played this time for each filed.

The play record data 900c is play data from a minigame played first to a minigame played last in the game application, and the score data for each minigame.

The play data 900d is play data on a minigame that is being currently played or has been played this time.

The ghost data 900e is ghost data including the ghost information and the play data 900d. However, the ghost data 900e is generated when the highest score is updated excluding in the ghost battle.

In addition, the player A data 900 includes data indicating the strength or level of the player A for the game of the application of this embodiment.

Moreover, the player A data 900 may include the ghost ID notified from the server 202.

Furthermore, some save data out of the player A data 900, such as the player name data, the play record data, the ghost data, etc. are read from the flash memory 84 and/or a storage medium attached to the slot 23 to be stored in the DRAM 85 at a proper timing after a power of the main body apparatus 2 is turned on. However, some save data, such as the player name data, the play record data, the ghost data, etc. may be acquired from a further computer (e.g., server 202) capable of performing communication with the main body apparatus 2.

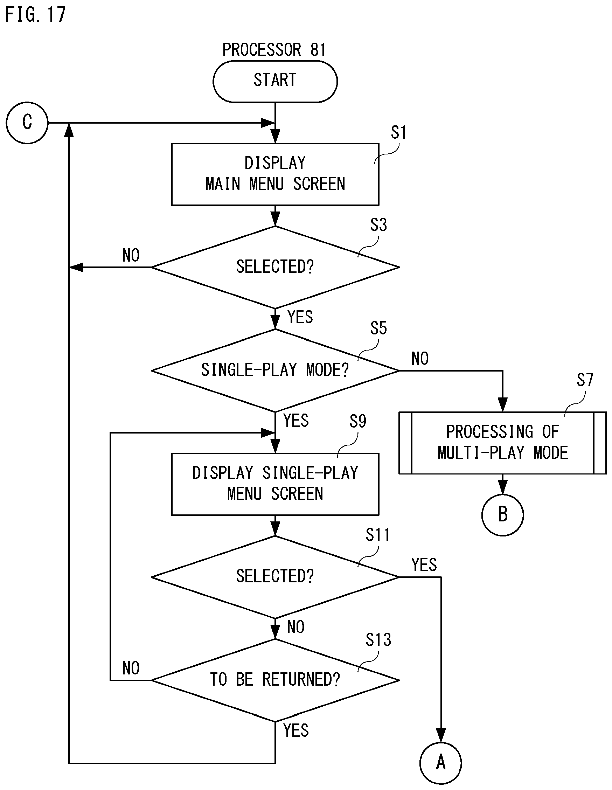

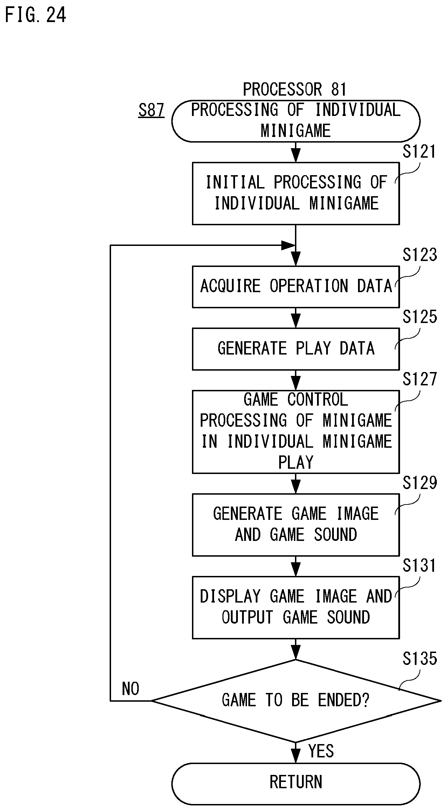

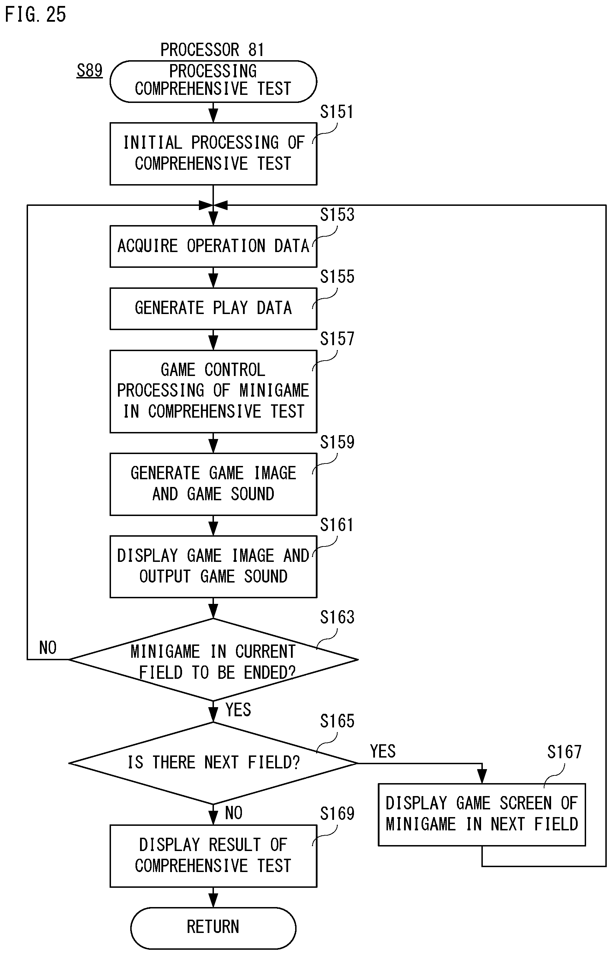

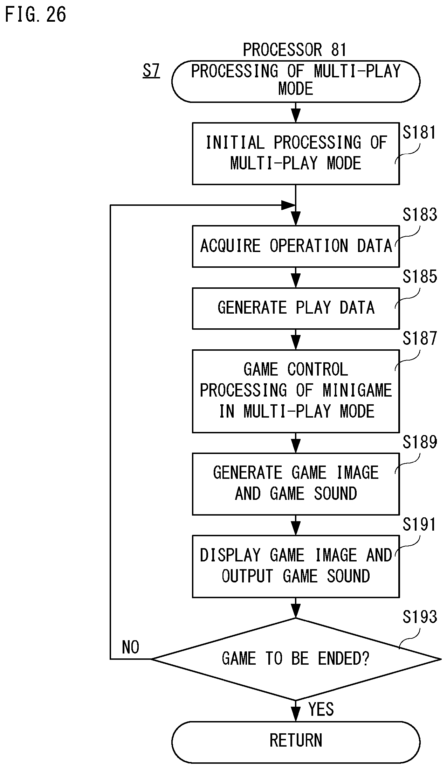

Figure 17 - Figure 23 are flowcharts showing non-limiting example processing (overall processing) of the game program of the processor 81 (or computer) of the main body apparatus 2. Moreover, Figure 24 is a flowchart showing non-limiting example processing of the individual minigame play of the processor 81 (or computer) of the main body apparatus 2. Figure 25 is a flowchart showing non-limiting example processing of the comprehensive test of the processor 81 (or computer) of the main body apparatus 2. Figure 26 is a flowchart showing non-limiting example processing of the multi-play mode of the processor 81 (or computer) of the main body apparatus 2.

In the following, although the overall processing, the processing of the individual minigame play, the processing of the comprehensive test and the processing of the multi-play mode will be described using Figure 17 - Figure 26, as to steps executing the same processing, a duplicate description will be omitted.

However, processing of respective steps of the flowcharts shown in Figure 17 - Figure 26 are mere examples, and if the same or similar result is obtainable, an order of the respective steps may be exchanged. Moreover, in this embodiment, it will be described that the processor 81 executes the processing of the respective steps of the flowcharts shown in Figure 17 - Figure 26 basically; however, some steps may be executed by a processor(s) and/or a dedicated circuit(s) other than the processor 81.

When the power of the main body apparatus 2 is turned on, prior to execution of the overall processing, the processor 81 executes a boot program stored in a boot ROM not shown, whereby respective units including the DRAM 85, etc. are initialized. Moreover, at this time, the processor 81 determines, according to the use mode determination program 852i, the game system 1 is in what use mode of the TV mode, the portable mode or the table mode based on whether the main body apparatus 2 is attached onto the cradle and the left controller 3 and the right controller 4 are attached to the main body apparatus 2. However, determination of the use mode is performed also at proper timings before the start of the overall processing and after the start. The main body apparatus 2 starts the overall processing when the execution of the game program of this embodiment is instructed by the user of the main body apparatus 2.

As shown in Figure 17, if starting the overall processing, the processor 81 displays, in a step S1, a main menu screen on the stationary monitor or the display 12. Here, the processor 81 generates a game image of the main menu screen using the image generation data 854d to output to the stationary monitor or the display unit 12. Hereinafter, the same is applied to a case of displaying various kinds of screens.

In a next step S3, it is determined whether there is any selection. If "NO" is determined in the step S3, that is, if no selection is performed, the process returns to the step S1. On the other hand, if "YES" is determined in the step S3, that is, if any selection is performed, it is determined, in a step S5, whether the single-play mode is selected.

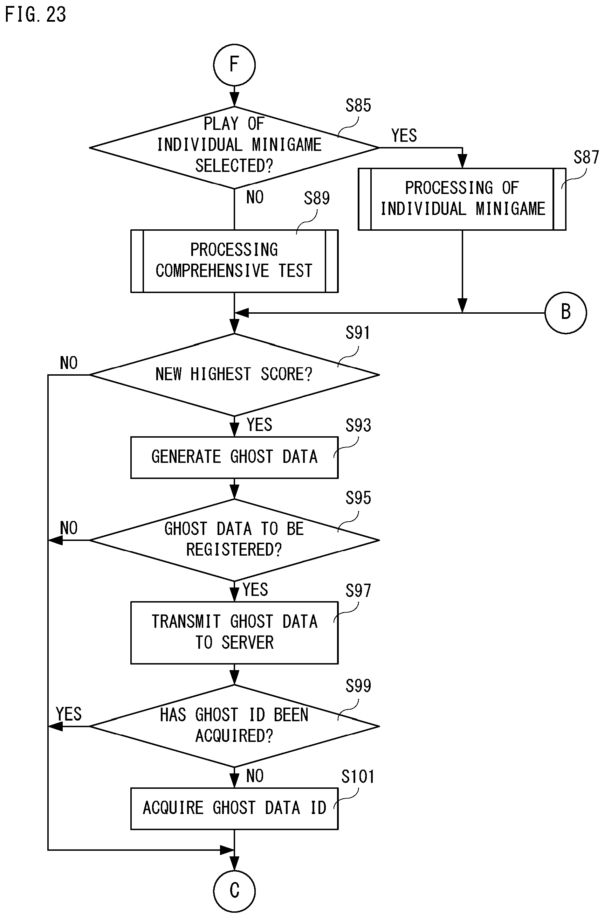

If "NO" is determined in the step S5, that is, if the multi-play mode is selected, processing of the multi-play mode (see Figure 26) described later is performed in a step S7, and the process proceeds to a step S91 shown in Figure 23. Although illustration is omitted, as described above, before performing the processing in the multi-play mode, the number of the players, respective players and the minigame to play are selected.

On the other hand, if "YES" is determined in the step S5, that is, if the single-play mode is selected, in a step S9, the single-play menu screen 300 as shown in Figure 9 is displayed on the stationary monitor or the display 12. Although illustration is omitted, a player is selected before displaying the single-play menu screen 300, as described above. Here, it is assumed that the player A is selected.

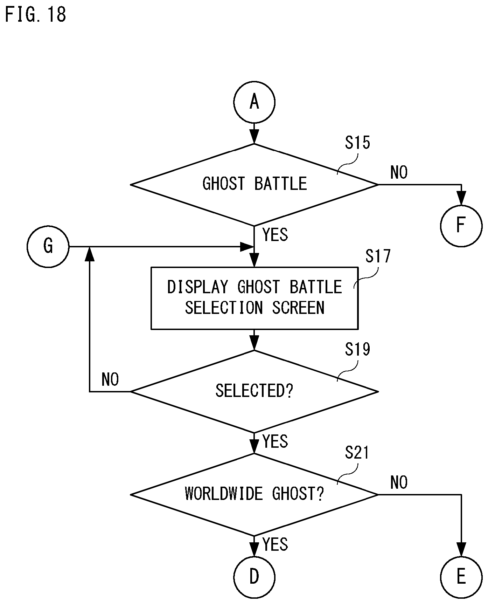

In a subsequent step S11, it is determined whether there is any selection. Here, the processor 81 determines whether the icon 302, 304 or 306 is turned on in the single-play menu screen 300. If "YES" is determined in the step S11, the process proceeds to a step S15 shown in Figure 18. On the other hand, if "NO" is determined in the step S11, it is determined, in a step S13, whether the process is to be returned to the main menu screen. Here, the processor 81 determines whether the icon 308 is turned on in the single-play menu screen 300.

If "NO" is determined in the step S13, that is, if it is not to return to the main menu screen, the process returns to the step S9. On the other hand, if "YES" is determined in the step S13, that is, if it is to return to the main menu screen, the process returns to the step S1. Therefore, the single-play menu screen 300 is undisplayed, and the main menu screen is displayed on the stationary monitor or the display 12.

As shown in Figure 18, it is determined, in a step 15, whether the ghost battle is selected. That is, the processor 81 determines whether the icon 304 is turned on. If "NO" is determined in the step S15, that is, if it is not selection of the ghost battle, the process proceeds to a step S85 shown in Figure 23. On the other hand, if "YES" is determined in the step S15, that is, if it is selection of the ghost battle, the ghost battle selection screen 450 as shown in Figure 12 is displayed on the stationary monitor or the display 12 in step S17.

In a next step S19, it is determined whether there is any selection. Here, it is determined whether the icon 452, 454, 456 or 458 is turned on in the ghost battle selection screen 450. If "NO" is determined in the step S19, the process returns to the step S17. On the other hand, if "YES" is determined in the step S19, it is determined, in a step 21, whether a battle against the worldwide ghost is to be selected. That is, the processor 81 determines whether the icon 452 is turned on.

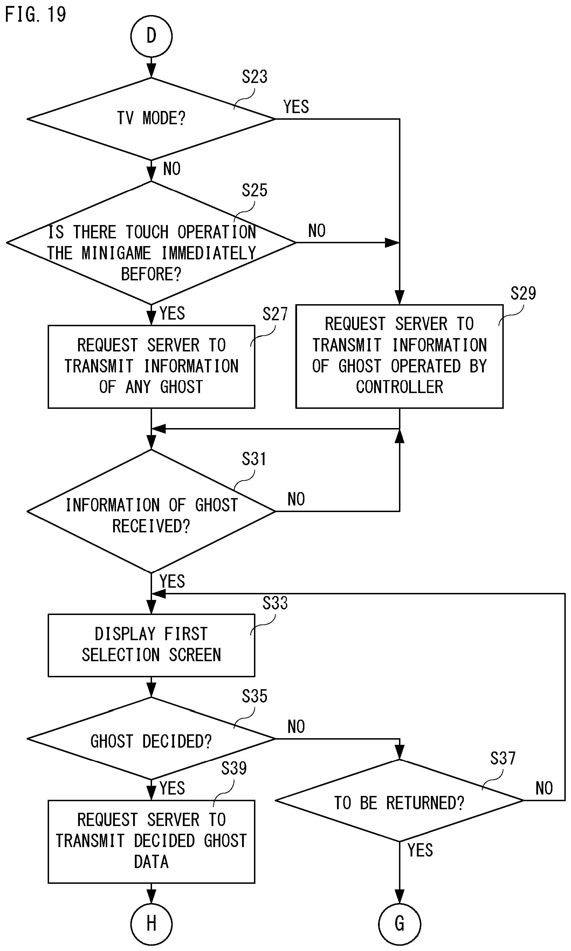

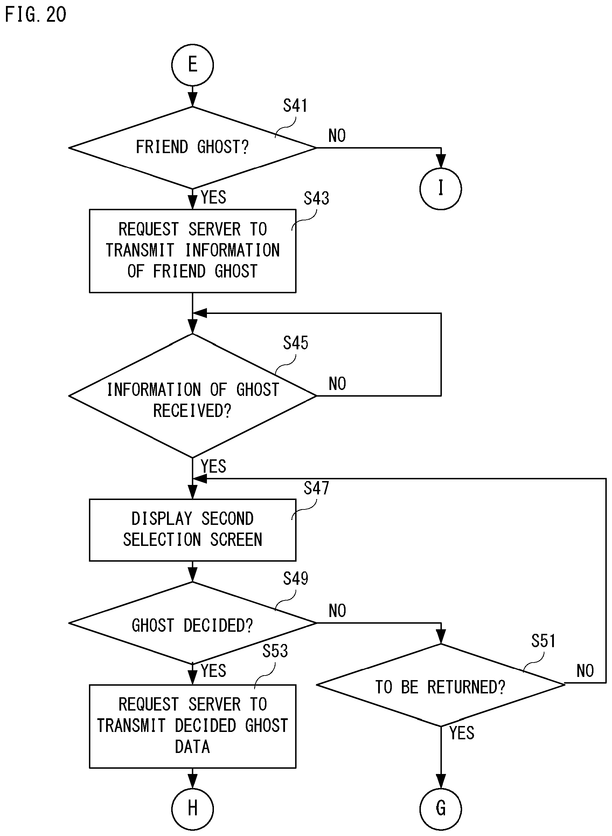

If "NO" is determined in the step S21, that is, if it is not selection of the battle against the worldwide ghost, the process proceeds to a step S41 shown in Figure 20. On the other hand, if "YES" is determined in the step S21, that is, if it is selection of the battle against the worldwide ghost, it is determined, in a step 23 shown in Figure 19, whether it is in the TV mode. Here, the processor 81 determines whether the use mode data 854g indicates the TV mode.

If "YES" is determined in the step S23, that is, if it is in the TV mode, the process proceeds to a step S29. On the other hand, if "NO" is determined in the step S23, that is, if it is in the portable mode or the table mode, it is determined, in a step S25, whether a touch operation is performed in the minigame immediately before. In the step S25, the processor 81 determines whether the touch flag that is added to the play data of the minigame immediately before included in the play record data 900c is turned on.

If "YES" is determined in the step S25, that is, if there is a touch operation in the minigame immediately before, the processor 81 requests the server 202 to transmit arbitrary ghost information in a step S27, and then, the process proceeds to a step S31. On the other hand, if "NO" is determined in the step S25, that is, if there is no touch operation in the minigame immediately before, in the step S29, the processor 81 requests the server 202 to transmit the information of the ghost that is operated by a controller (in this embodiment, the left controller 3 and/or the right controller 4) but not operated by the touch panel 13, that is, requests the server 202 to select the ghost having turned-off touch flag, and then, the process proceeds to the step 31.

In the step S31, it is determined whether the ghost information is received from the server 202. If "NO" is determined in the step S31, that is, if the ghost information is not received from the server 202, the process returns to the step S31. On the other hand, if "YES" is determined in the step S31, that is, if the ghost information is received from the server 202, in a step S33, the first selection screen 500 as shown in Figure 13 is displayed on the stationary monitor or the display 12.

Subsequently, in a step S35, it is determined whether it is decision of a ghost. Here, the processor 81 determines whether the A button 53 (the down direction button 34 when only the left controller 3 is used, and the X button 55 when only the right controller 4 is used) is turned on, or whether the icon 508 is touched, or whether the card object 502 is touched.

If "NO" is determined in the step S35, that is, if it is not decision of a ghost, it is determined, in a step S37, whether the screen is to be returned to the ghost battle selection screen 450. Here, the processor 81 determines whether the B button 54 (the left direction button 36 when only the left controller 3 is used, and the A button 53 when only the right controller 4 is used) is turned on, or whether the icon 506 is touched.

If "NO" is determined in the step S37, that is, if it is not to return to the ghost battle selection screen 450, the process returns to the step S33. Although illustration is omitted, a plurality of card objects 502 being displayed may be moved to the left or the right by moving the cursor object 504 to the right or the left according to an operation of the player A. On the other hand, if "YES" is determined in the step S37, that is, if it is to return to the ghost battle selection screen 450, the process returns to the step S17 shown in Figure 18.

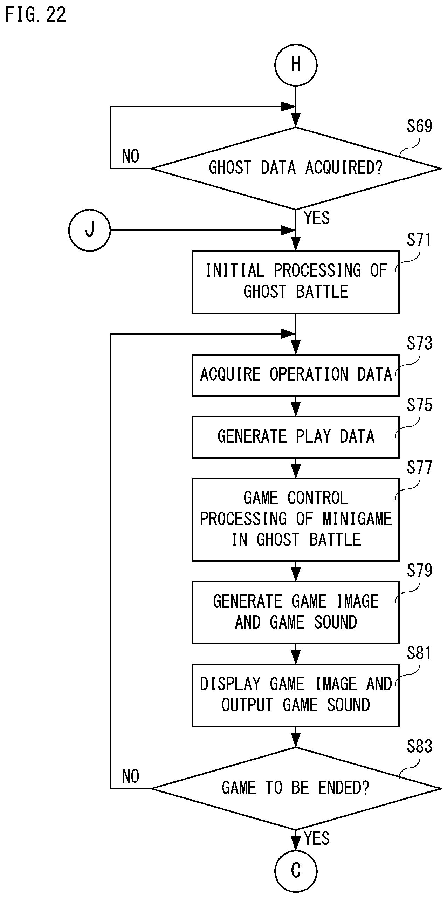

Moreover, if "YES" is determined in the step S35, that is, if it is decision of a ghost, the process or 81 requests, in a step S39, the server 202 to transmit the ghost data of the ghost decided, and then, the process proceeds to a step S69 shown in Figure 22. That is, in the step S39, the processor 81 transmits the ghost data ID of the ghost decided to the server 202.

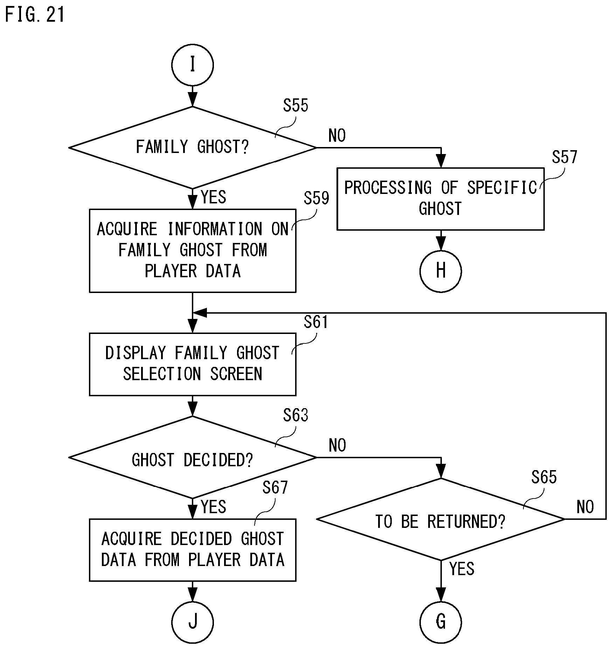

As described above, if "NO" at step S21 in Figure 18, it is determined whether it is selection of a battle against the friend ghost in the step S41 shown in Figure 20. That is, the processor 81 determines whether the icon 454 is turned on. If "NO" is determined in the step S41, that is, if it is not selection of the battle against the friend ghost, the process proceeds to a step S55 shown in Figure 21. On the other hand, if "YES" is determined in the step S41, that is, if it is selection of the battle against the friend ghost, the processor 81 requests the server 202 to transmit the information of the friend ghost in a step S43. Here, the processor 81 also transmits all the friend identification information registered as friends of the player A to the server 202.

In a subsequent step S45, it is determined whether the ghost information is received. If "NO" is determined in the step S45, the process returns to the step S45. On the other hand, if "YES" is determined in the step S45, in a step S47, the second selection screen 500a as shown in Figure 14 is displayed on the stationary monitor or the display 12.

Subsequently, in a step S49, it is determined whether it is decision of a ghost. If "NO" is determined in the step S49, it is determined, in a step S51, whether the screen is to be returned to the ghost battle selection screen 450.

If "NO" is determined in the step S51, the process returns to the step S47. Although illustration is omitted, a plurality of card objects 502a being displayed may be moved to the left or the right by moving the cursor object 504 to the right or the left according to an operation of the player A. On the other hand, if "YES" is determined in the step S51, the process returns to the step S17.

Moreover, if "YES" is determined in the step S49, the processor 81 requests, in a step S53, the server 202 to transmit the ghost data of the decided ghost, and then, the process proceeds to the step S69.

As described above, if "NO" is determined in the step S41 in Figure 20, it is determined whether it is selection of a battle against the family ghost in the step S55 shown in Figure 21. That is, the processor 81 determines whether the icon 456 is turned on. If "NO" is determined in the step S55, that is, if it is not selection of the battle against the family ghost, selection processing of the above-described specific is performed in a step S57, and then, the process proceeds to a step S69.

On the other hand, if "YES" is determined in the step S55, that is, if it is selection of the battle against the family ghost, the processor 81 acquires, in a step S59, the ghost information on the family ghost from the player data 854e stored in the data storage area 854 of the DRAM 85. Since a case where the player A is selected as a player in the single-paly mode is being described as described above, in the step S59, the ghost information is acquired from the ghost data included in each of the player B data 902, the player C data 904, --- of the players B, C, --- other than the player A.

In a next step S61, the family ghost selection screen is displayed on the stationary monitor or the display 12. Subsequently, it is determined whether it is decision of a ghost in a step S63. If "NO" is determined in the step S63, it is determined the screen is to be returned to the ghost battle selection screen 450 in a step S65.

If "NO" is determined in the step S65, the process returns to the step S61. Although illustration is omitted, a plurality of card object being displayed may be moved to the left or the right by moving the cursor object to the right or the left according to an operation of the player A. On the other hand, if "YES" is determined in the step S65, the process returns to the step S17.

Moreover, if "YES" is determined in the step S63, that is, if it is decision of a ghost, the processor 81 acquires, in a step S67, the ghost data of the decided ghost from the player data 854e, and then, the process proceeds to a step S71 shown in Figure 22. In the step S67, the ghost data acquired from the player data 854e is stored as the acquired ghost data 854f in the data storage area 854 of the DRAM 85.

As shown in Figure 22, in the step S69, it is determined whether the ghost data is acquired. Here, the processor 81 determines whether the ghost data transmitted from the server 202 is received.

If "NO" is determined in the step S69, that is, if the ghost data is not acquired, the process returns to the step S69. On the other hand, if "YES" is determined in the step S69, that is, if the ghost data is acquired, the processor 81 performs game initial processing in the ghost battle in the step S71.

However, the processor 81 stores the ghost data acquired from the server 202 in the data storage area 854 of the DRAM 85 as the acquired ghost data 854f.

Moreover, the processor 81 displays the initial screen of the ghost battle screen 400 as shown in Figure 11 on the stationary monitor or the display 12 in the step S71. However, in the ghost battle screen 400, the game screen 402 of the player A for playing the minigame of the minigame name included in the acquired ghost data 854f and the game screen 404 of the ghost of the acquired ghost data 854f are included.

In a subsequent step S73, the operation data is acquired. Here, the processor 81 acquires the operation data from the controller (the left controller 3, the right controller 4 or the further controller) or the operation data on the touch input from the touch panel 13. Moreover, in a step S73, the processor 81 acquires the operation data of the current time (the number of frames) from the play data included in the acquired ghost data 854f.

In a next step S75, the play data is generated. Although illustration is omitted, a time period (the number of frames) from the game start of the ghost battle is counted, and the play data 900d of the player A is generated or updated when the operation data of the player A is acquired in the step S73. Moreover, when the operation data of the touch input is acquired, the touch flag added to the play data 900d is turned on.

In a subsequent step S77, the game control processing of the minigame in the ghost battle is performed. Here, the object displayed in the game screen 402 is selected, moved or decided according to the operation of the payer A, and the object displayed in the game screen 404 is selected, moved or decided according to the operation of the ghost. Moreover, in the game control processing of the ghost battle, the processor 81 determines a correct answer or incorrect answer for each question in the minigame, calculates the scores of the player A and the ghost, determines the victory or defeat of the player A for each question, and determines the final victory or defeat of the player A for the minigame.

However, when the minigame that the player A selects to perform only the touch operation is being played, even if the operation data of the left controller 3 and/or the right controller 4 is detected, the game control processing based on this operation data is not performed. Moreover, when the minigame that the player A selects to perform only the button operation is being played, even if the operation data of the touch input from the touch panel 13 is detected, the game control processing based on this operation data is not performed. These are the same also for the processing of the individual minigame, the processing of the multi-play mode and the processing for the comprehensive test that will be respectively described later.

Subsequently, the game image and the game sound are generated in a step S79. Here, based on a result of the game control processing of the minigame in the ghost battle in the step S77, the processor 81 generates the game image data corresponding to the game image and the game sound data corresponding to the game sound.

In a next step S81, the game image is displayed and the game sound is output. Here, the processor 81 outputs the game image data generated in the step S79 to the stationary monitor or the display 12, and outputs the game sound data generated in the step S79 to a speaker of the stationary monitor, or the speaker 88 via the codec circuit 87.

Then, in a step S83, it is determined whether the game is to be ended. Here, the processor 81 determines whether the final victory or defeat for the minigame is determined. If "NO" is determined in the step S83, that is, if the game is not to be ended, the process returns to the step S73. On the other hand, if "YES" is determined in the step S83, that is, if the game is to be ended, the process returns to the step S1 shown in Figure 17.

Moreover, as described above, if "NO" is determined in the step S15 shown in Figure 18, it is determined whether it is selection of the individual minigame play in the step S85 shown in Figure 23. Here, the processor 81 determines whether the icon 302 is turned on.

If "YES" is determined in the step S85, that is, if it is selection of the individual minigame play, processing of the individual minigame play (see Figure 24) described later is performed in a step S87, and then, the process proceeds to the step S91. On the other hand, if "NO" is determined in the step S85, that is, if it is not selection of the individual minigame play, processing of the comprehensive test (see Figure 25) described later is performed in a step S89, and then, the process proceeds to the step S91.

In the step S91, it is determined whether the highest score is updated. If "NO" is determined in the step S91, that is, if the highest score is not updated, the process returns to the step S1. On the other hand, if "YES" is determined in the step S91, that is, if the highest score is updated, the ghost data is generated in a step S93, and it is determined, in a step S95, whether the ghost data is to be registered in the server 202. However, the ghost data generated in the step S93 is stored in the player data (here, player A data 900).

If "NO" is determined in the step S95, that is, if the ghost data is not to be registered in the server 202, the process returns to the step S1. If "YES" is determined in the step S95, the ghost data is transmitted to the server 202 in a step S97, and it is determined, in a step S99, whether the ghost ID has been acquired. Here, since it is assumed that the player A is selected, in the step S99, the processor 81 determines whether the ghost ID is included in the player A data 900.

If "YES" is determined in the step S99, that is, if the ghost ID has been acquired, the process returns to the step S1. On the other hand, if "NO" is determined in the step S99, that is, if the ghost ID has not been acquired, the processor 81 acquires the ghost ID from the server 202 in a step S101, and the process returns to the step S1.

However, the processor 81 executes the steps S91-S101 for each player individually when performing the processing of the multi-play mode. Moreover, the processor 81 executes the step S91-S101 for the minigame for each field individually when performing the comprehensive test. Here, since it is assumed that the player A is selected, in the step S101, the processor 81 stores the ghost ID acquired in the player A data 900.

Figure 24 is a flowchart showing non-limiting example processing of the individual minigame play in the step S87 shown in Figure 23. As shown in Figure 24, if the processing of the individual minigame play is started, the processor 81 performs game initial processing in the individual minigame play in a step S121. Here, the processor 81 selects the field and the minigame, and displays for the selected minigame the game screen 350 as shown in Figure 10 on the stationary monitor or the display 12.

In a subsequent step S123, the operation data is acquired. Here, the processor 81 acquires the operation data from the controller (the left controller 3, the right controller 4 or the further controller) or the operation data on the touch input from the touch panel 13.

In a next step S125, the processor 81 generates the play data. A time period (the number of frames) from the game start of the minigame is counted, and when the operation data is acquired, the play data 900d of the player A is generated or updated.

In a subsequent step S127, the game control processing of the minigame in the individual minigame play is performed. Here, the processor 81 selects, moves or decides the object according to an operation by the player A. Moreover, in the minigame in the individual minigame play, the processor 81 calculates the score in the minigame, and determines a correct answer or incorrect answer for each question.

Subsequently, in a step S129, the game image and the game sound are generated. Here, based on a result of the game control processing of the minigame in the individual minigame play in the step S127, the processor 81 generates the game image data corresponding to the game image and the game sound data corresponding to the game sound.

In a next step S131, the game image is displayed and the game sound is output. Here, the processor 81 outputs the game image data generated in the step S129 to the stationary monitor or the display 12, and outputs the game sound data generated in the step S 129 to a speaker of the stationary monitor, or the speaker 88 via the codec circuit 87.

Then, in a step S133, it is determined whether the game is to be ended. Here, the processor 81 determines whether the final victory or defeat for the minigame is determined. If "NO" is determined in the step S133, that is, if the game is not to be ended, the process returns to the step S123. On the other hand, if "YES" is determined in the step S133, that is, if the game is to be ended, the individual minigame play is ended, and the process returns to the overall processing shown in Figure 17-Figure 23.

Figure 25 is a flowchart showing non-limiting example processing of the comprehensive test in the step S89 shown in Figure 23. As shown in Figure 25, if the processing of the comprehensive test is started, the processor 81 performs game initial processing in the comprehensive test in a step S151. Here, the processor 81 selects the minigame to play for each field, and displays for the selected minigame in the first field the game screen on the stationary monitor or the display 12.

However, it is assumed that in the game of the comprehensive test of this embodiment, an order of playing minigames for a plurality of fields is determined in advance. This is an example, and such an order may be determined by the player, and the order may be determined at random for each time playing the game of the comprehensive test.

In a subsequent step S153, the operation data is acquired. Here, the processor 81 acquires the operation data from the controller (the left controller 3, the right controller 4 or the further controller) or the operation data on the touch input from the touch panel 13.

In a next step S155, the processor 81 generates the play data. A time period (the number of frames) from the game start of each minigame is counted, and when the operation data is acquired, the play data of the player is generated or updated for each field.

In a subsequent step S157, the game control processing of the minigame in the comprehensive test is performed. Here, the processor 81 selects, moves or decides the object in a game screen according to an operation of the player.

Subsequently, in a step S159, the game image and the game sound are generated. Here, based on a result of the game control processing of the minigame in the comprehensive test in the step S157, the processor 81 generates the game image data corresponding to the game image and the game sound data corresponding to the game sound.

In a next step S161, the game image is displayed and the game sound is output. Here, the processor 81 outputs the game image data generated in the step S159 to the stationary monitor or the display 12, and outputs the game sound data generated in the step S159 to a speaker of the stationary monitor, or the speaker 88 via the codec circuit 87.

In a subsequent step S163, it is determined whether the minigame of the current field is to be ended. Here, the processor 81 determines whether the last question in the minigame of the current field has been answered. If "NO" is determined in the step S163, that is, if the minigame of the current field is not to be ended, the process returns to the step S153. On the other hand, if "YES" is determined in the step S163, that is, if the minigame of the current field is to be ended, it is determined, in a step S165, whether there is any minigame of a next field in a step S165.

If "YES" is determined in the step S165, that is, if there is a minigame of the next field, the game screen of the minigame of the next field is displayed in a step S167, and the process returns to the step S153. On the other hand, if "NO" is determined in the step S165, that is, if the minigames of all the fields are ended and there is no minigame of the next field, a result of the comprehensive test is displayed and the processing of the comprehensive test is ended in a step S169, and the process returns to the overall processing shown in Figure 17-Figure 23. The processor 81 displays the score of each field in the step S169.

Figure 26 is a flowchart showing non-limiting example processing of the multi-play mode in the step S81 shown in Figure 17. As shown in Figure 26, if the processing of the multi-play mode is started, the processor 81 performs game initial processing in the multi-play mode in a step S181. Here, the processor 81 displays a game screen for each of the players and minigame that are selected before the start of the processing in the multi-play mode on the stationary monitor or the display 12. However, the processor 81 displays the game screens for respective players in a case of a minigame that they play a battle against each other, and the processor 81 displays a single game screen common to respective players in a case of a minigame that the respective players play in cooperation with each other.

In a subsequent step S183, the operation data is acquired. Here, when playing with two (2) players, the processor 81 acquires the operation data of the controller (the left controller 3, the right controller 4 or the further controller) or the operation data of the touch input from the touch panel 13. Here, when playing with three (3) or more players, the processor 81 acquires the operation data of the controller (the left controller 3, the right controller 4 or the further controller).

In a next step S185, the processor 81 generates the play data. A time period (the number of frames) from the game start of the minigame is counted, and when the operation data is acquired, the play data for each player is generated or updated.

In a subsequent step S187, the game control processing of the minigame in the multi-play mode is performed. Here, in a case of a minigame that a plurality of players play a battle against each other, the processor 81 selects, moves or decides the object in each of the game screens according to an operation of each of the players. Moreover, in a case if a minigame that a plurality of players play in cooperation with each other, the processor 81 selects, moves or decides the object in the single game screen according to an operation of each player. Moreover, in the game control processing of the minigame in the multi-play mode, the processor 81 calculates the score in the minigame individually or entirely, and determines the correct answer or the incorrect answer of each question individually or entirely.

Subsequently, in a next step S189, the game image and the game sound are generated. Here, based on a result of the game control processing of the minigame in the multi-play mode in the step S187, the processor 81 generates the game image data corresponding to the game image and the game sound data corresponding to the game sound. However, in a case of the minigame that a plurality of players play a battle against each other, the game image and the game sound are generated, respectively. Moreover, in a case of the minigame that a plurality of players play in cooperation with each other, a single game image and a single game sound common to the respective plyers.

In a next step S191, the game image is displayed and the game sound is output. Here, the processor 81 outputs the game image data generated in the step S189 to the stationary monitor or the display 12, and outputs the game sound data generated in the step S189 to a speaker of the stationary monitor, or the speaker 88 via the codec circuit 87.

Then, in a step S193, it is determined whether the game is to be ended. Here, the processor 81 determines whether the final victory or defeat (or raking) for the minigame is determined. If "NO" is determined in the step S193, that is, if the game is not to be ended, the process returns to the step S183. On the other hand, if "YES" is determined in the step S193, that is, if the game is to be ended, the processing of the multi-play mode is ended, and the process returns to the overall processing shown in Figure 17-Figure 23.

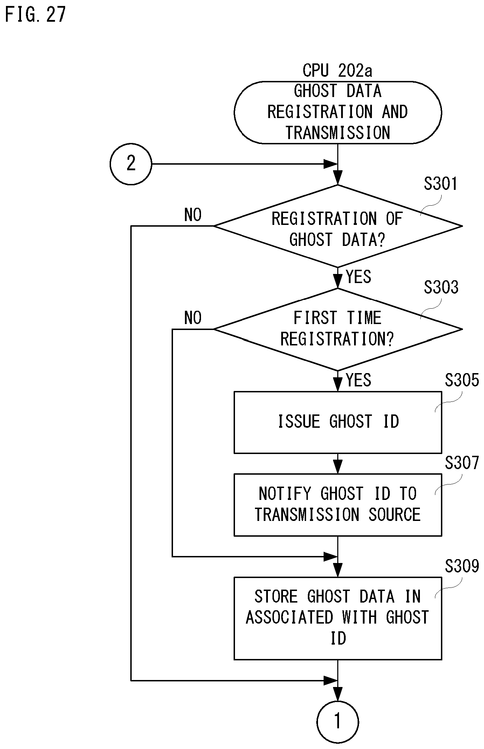

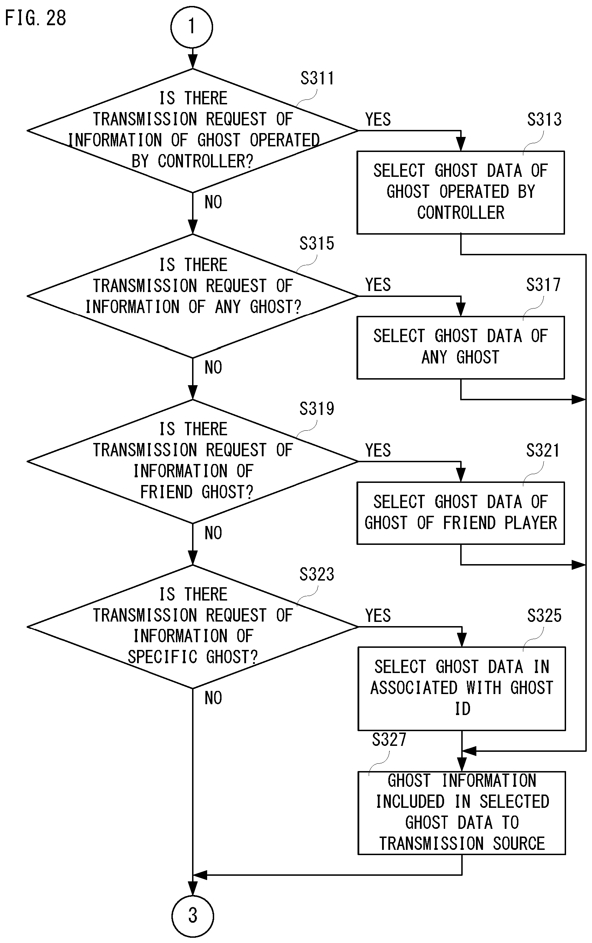

Figure 27-Figure 29 are flowcharts showing non-limiting example ghost data registration and transmission processing of the CPU 202a incorporated in the server 202 shown in Figure 8. As shown in Figure 28, if the ghost data registration and transmission processing is started, the CPU 202a determines it is ghost data registration. Here, it is determined whether the ghost data transmitted from the main body apparatus 2 is received.

If "NO" is determined in the step S301, that is, if it is not ghost data registration, the process proceeds to a step S311 shown in Figure 28. On the other hand, if "YES" is determined in the step S301, that is, if it is ghost data registration, it is determined, in a step S303, whether the registration is for the first time. Here, the CPU 202a determines whether the ghost ID is assigned to the player of the player name included in the ghost data.

If "NO" is determined in the step S303, that is, if the registration is not for the first time, the process proceeds to a step S309. If "YES" is determined in the step S303, that is, if the registration is for the first time, the ghost ID is issued to the player of the player name included in the ghost data in a step S305.

In a subsequent step S307, the CPU 202a transmits the ghost ID issued in the step S305 to the main body apparatus 2 that is a transmission source of the ghost data, and then, the process proceeds to the step S309. In the step S309, the ghost data is stored in the HDD 200c in association with the ghost ID. Here, the CPU 202a issues the ghost data ID, makes the ghost data ID be associated with the ghost ID, and stored in the HDD 202c while adding the ghost data ID to the ghost data.

As shown in Figure 28, in a next step S311, it is determined whether there is a transmission request of the information of the ghost that operated by the controller. If "YES" is determined in the step S311, that is, if there is a transmission request of the information of the ghost that is operated by the controller, in a step S313, the CPU 202a selects multiple pieces of ghost data (e.g., seven (7) pieces in this embodiment) each operated by the controller out of the ghost data that the server 202 manages, and then, the process proceeds to a step S327. As described above, in the step S313, the CPU 202a preferentially selects the ghost data with newer date. This is the same also for a step S317.

On the other hand, if "NO" is determined in the step S311, that is, if there is no transmission request of the information of the ghost operated by the controller, it is determined, in a step S315, whether there is a transmission request of the information of arbitrary ghost. If "YES" is determined in the step S315, that is, if there is a transmission request of the information of an arbitrary ghost, in the step S317, the CPU 202a selects multiple pieces of arbitrary ghost data (e.g., seven (7) pieces in this embodiment) out of the ghost data that the server 202 manages, and then, the process proceeds to the step S327.

On the other hand, if "NO" is determined in the step S315, that is, if there is no transmission request of the information of an arbitrary ghost, it is determined, in a step S319, whether there is a transmission request of the information of the friend ghost. If "YES" is determined in the step S319, that is, if there is a transmission request of the information of the friend ghost, in a step S321, the CPU 202a selects multiple pieces of ghost data (e.g., up to seven (7) pieces in this embodiment) of the friend player(s) out of the ghost data that the server 202 manages, and then, the process proceeds to the step S327. However, the friend player is a friend player indicated by the friend identification information added to the transmission request of the information of the friend ghost.

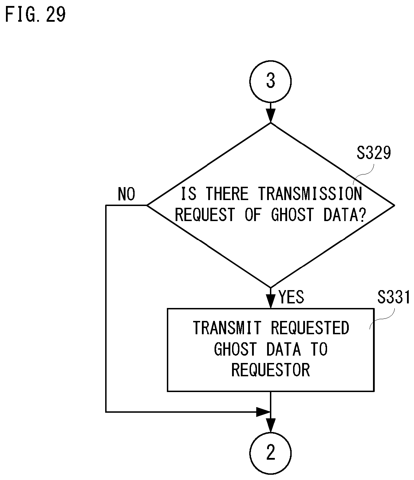

On the other hand, if "NO" is determined in the step S319, that is, if there is no transmission request of the information of the friend ghost, it is determined, in a step S323, whether there is a transmission request of the information of a specific ghost. If "NO" is determined in the step S323, that is, if there is no transmission request of the information of a specific ghost, the process proceeds to a step S329 shown in Figure 29.

On the other hand, if "YES" is determined in the step S323, that is, if there is a transmission request of the information of a specific ghost, the CPU 202a selects one or more pieces of ghost data associated with the ghost ID that is added to the transmission request of the specific ghost(s) out of the ghost data that the server 202 manages, and then, the process proceeds to the step S327.

In the step S327, the CPU 202a transmits the ghost information included in the one or more pieces ghost data as selected to the main body apparatus 2 that is a requestor of the ghost information, and the process proceeds to the step S329. However, the ghost data ID is added to each piece of the ghost information.

As shown in Figure 29, in the step S329, it is determined whether there is a transmission request of the ghost data. If "NO" is determined in the step S329, that is, if there is no transmission request of the ghost data, the process returns to the step S301 shown in Figure 27. On the other hand, if "YES" is determined in the step S329, that is, if there is a transmission request of the ghost data, the ghost data as requested is transmitted to the main body apparatus 2 that is a requestor in a step S331, and the process returns to the step S301. As described above, in the S301, the CPU 202a transmits the ghost data indicated by the ghost data ID that is added to the transmission request of the ghost data to the main body apparatus 2 that is a requestor.

According to this embodiment, since the ghost data including the play data with the touch operation is not selected for the player that cannot perform the touch operation or does not perform the touch operation, it is possible to avoid the player from playing against the ghost in a disadvantageous situation. That is, it is possible to select a suitable ghost according to the play state of the player.

In addition, although the ghost data is automatically generated when the highest score is updated in this embodiment except for a case where the minigame is played in the ghost battle, the ghost data may be generated according to an operation of the player even if the highest score is not updated.

Moreover, in this embodiment, although the friend ghost data is acquired from the server, it does not need to be limited to this. The ghost data of the friend ghost may be acquired by receiving the ghost data transmitted from the main body apparatus 2 of the friend player or by reading the ghost data stored in the external storage (e.g., an SD card or "amiibo" (registered trademark)) by means of the main body apparatus 2 of the player.

Furthermore, in this embodiment, although it was made for a server to select about the worldwide ghost, the friend ghost and the specific ghost, it does not need to be limited to this. The predetermined number of pieces of the ghost data (e.g., several hundred) may be distributed in advance from the server to the main body apparatus, whereby the main body apparatus can select the ghost data. In this case, the main body apparatus may acquire the predetermined number of pieces of the ghost data stored in the external storage medium (e.g., an SD card or "amiibo" (registered trademark)).

Furthermore, in this embodiment, when displaying the selection screen for the worldwide ghost, the friend ghost and the specific ghost, the ghost information is acquired from the server, and when deciding the opponent ghost, the ghost data is acquired from the server, but it does not need to be limited to this. When displaying the selection screen for the worldwide ghost, the friend ghost and the specific ghost, the ghost data may be acquired from the server in advance, and the selection screen is displayed using the ghost information included in the acquired ghost data, thereby to play a battle using the play data included in the ghost data that is decided as the opponent.

Moreover, in this embodiment, although when selecting the ghost that the touch flag is turned off, the server is requested to select the ghost having turned-off touch flag, it does not need to be limited to this. For example, when requesting the server 202 to select the ghost, the number of ghosts larger than the display number (e.g., seven (7)) may be selected regardless of presence or absence of the touch flag, whereby only the ghost having turned-off touch flag can be selected and displayed in the main body apparatus that receives the ghosts. Thus, it becomes unnecessary to download again from the server at the time when re-displaying the ghost with exchanging the ghost, and therefore, it is possible to shorten a time period required for re-displaying. Moreover, even if the play mode is changed after displaying the card object of the ghost, it is possible to immediately re-display the ghost in correspondence to the play mode.

Moreover, in this embodiment, as for some minigames, two types of the games are prepared, one of which a game that is played by only the button operation and the other is a game that is played by only the touch operation, and either one is selected before playing the minigame, but it does not need to be limited to this. As for the minigames other than some minigames, the player may select whether to play by only the touch operation or by only the button operation. In that case, identification information capable of identifying that a game has been played by only the touch operation or that a game has been played by only the button operation is added to the play data, and some minigames may be selected like the ghost that is played by only the touch operation or by only the button operation.

Moreover, although this embodiment shows the game system 1 as an example of a game system, structure thereof does not need to be limited, and further structure can be adopted. For example, in the above-described embodiment, the above-described "computer" is a single computer (specifically, the processor 81), but it may be a plurality of computers in another embodiment. The above-described "computer" may be a plurality of computers provided in a plurality of apparatuses, for example, and more specifically, the above-described "computer" may be constituted by the processor 81 of the main body apparatus 2 and the communication control sections (microprocessors) 101 and 111 provided on the controllers.

Moreover, although this embodiment is described on a case where the main body apparatus 2 is connected to the server 202 via the network 204, the game apparatus does not need to be limited to the main body apparatus 2. A further game apparatus capable of playing the minigame in the game application according to the embodiment, such as a smartphone and a personal computer (a tablet PC, a laptop PC or stationary computer) may be connected to the server 202 via the network 204. When connecting the further game apparatus, etc. other than the main body apparatus 2 to the server 202, a case where no touch input performed is treated as the TV mode, an input by an input device except an input device capable of performing a touch input (e.g., keyboard of hardware or software and/or computer mouse) is treated as an input by the controller.

Therefore, the ghost data does not need to be limited to the ghost data including the play data played on the main body apparatus. In addition, although the computer mouse is a pointing device that is the same as the touch panel, since it is necessary to perform an operation moving the cursor object and an operation deciding the balloon object to break, the mouse is required to perform an operation similar to the above-described controller and the keyboard.

Furthermore, although this embodiment is described on a case where the game system 1 having structure that the left controller 3 and the right controller 4 are attachable to or detachable from the main body apparatus 2 is used, it does not need to be limited to this. For example, it is possible to use a game apparatus including the main body apparatus 2 integrally provided with an operating portion having operating buttons and analog sticks similar to those of the left controller 3 and the right controller 4, or a game apparatus such as further electronic equipment capable of executing a game program. The further electronic equipment corresponds to smartphones, tablet PCs or the like. In such a case, an operating portion may constitute with software keys.

Furthermore, specific numeral values and images shown in the above-described embodiment are mere examples and can be appropriately changed according to actual products.

## Claims

1. An information processing system (200), comprising:
an information processing apparatus (1) having a touch panel (13);
a data storer (202a, S309) configured to store play data indicating a play content that is data indicating a change of an operation input of a first user or data indicating a content of processing executed according to the operation input of the first user of a game that is played by at least the first user in association with the first user and the game;
a battle performer (81, S71-S83) configure to perform battle processing that a second user asynchronously plays a battle against the first user;
a play state judger (81, S23, S25) configured to judge, when the second user plays the battle, a play state indicating a state related to a game play of the second user; wherein the play state judger judges whether the information processing apparatus (1) is being in a state where the information processing apparatus (1) cannot receive the operation input using the touch panel (13) as an input device by the second user and when it is determined that the information processing apparatus (1) is in a state where the information processing apparatus (1) can receive the operation input using the touch panel the play state judger determines whether the second user performed an operation input using the touch panel (13) as an input device in the game that the second user previously played; and
a data acquirer (81, S31, S45, S59) configure to acquire play data associated with the game before the second user plays a battle, wherein
the data storer (202a, S309) configured to store data indicating whether the first user performed the operation input using the touch panel (13) when playing the game in association with the play data,
the data acquirer (81, S31, S45, S59) further configured to acquire play data that is selected based on the data indicating whether the first user performed the operation input using the touch panel (13) and the play state of the second user, and
the battle performer (81, S71-S83) further configured to perform the battle processing of a battle that determines victory or defeat of the battle based on a score calculated based on the operation input of the second user and a score calculated based on the play content of the first user using the game that the second user asynchronously plays the battle against the first user by reproducing, using acquired play data, the play content of the first user associated with acquired play data.

2. The information processing system according to the claim 1, wherein the data acquirer (81, S31, S45, S59) is further configured to acquire the play data by preferentially selecting play data that the input device (3, 4, 13) being the same as the input device (3, 4, 12) used by the second user is used when the second user plays the battle.

3. The information processing system according to the claim 1, wherein the data acquirer (81, S31, S45, S59) is further configured to acquire the play data by selecting play data that the input device (3, 4, 13) being the same as the input device (3, 4, 13) used by the second user is used by not selecting play data that the input device (3, 4, 13) being different from the input device used by the second user is used when the second user plays the battle.

4. The information processing system according to any one of the claim 1 to the claim 3, wherein the play state judger (81, S23, S25) is further configured to judge the play state based on the input device (3, 4, 13) that the second user uses up to a time that the second user plays a battle.

5. The information processing system according to the claim 4, wherein the play state judger (81, S23, S25) is further configured to judge the play state based on the input device (3, 4, 13) that the second user uses in a game immediately before a time that the second user plays a battle.

6. The information processing system according to any one of the claim 1 to the claim 5, wherein the data acquirer (81, S31, S45, S59) is further configured to make the play data with which a touch input device (13) is associated as the input device (3, 4, 13) that the first user uses be difficult to be selected when the input device that the second user uses when the second user plays a battle is a button input device (3, 4).

7. The information processing system according to any one of the claim 1 to the claim 6, wherein the data acquirer (81, S31, S45, S59) is further configured to acquire multiple pieces of play data, and includes a data presenter (81, S33, S47, S61) that acquires multiple pieces of play data and presents the plurality pieces of play data acquired so that the second user can select play data.

8. The information processing system according to any one of the claim 1 to the claim 7, further comprising a relationship determiner (81, S41, S55) configured to determine the first user and the second user have what kind of relationship, wherein
the data acquirer (81, S31, S45, S59) is further configured to acquire play data that is selected based on the input device used by the first user and the play state of the second user when the relationship is a first relationship, and when the relationship is a second relationship, the data acquirer acquires the play data by permitting play data that the input device (3, 4, 13) different from the input device (3, 4, 13) that the second user uses to be selected.

9. The information processing system according to any one of the claim 1 to the claim 7, wherein when the data storer (202a, S309) is further configured to store play data that an input from only the input device (3, 4, 13) designated by the first user before a start of the game in association with the first user and the game, and
the battle performer (81, S71-S83) is further configured to permit, when the input device designated by the first user is a first input device (3,4), only the first input device (3,4) as the input device that the second user uses in the battle, and when the input device designated by the second user is a second input device (13), the battle performer permits an input device other than the second input device (13) as the input device that the second user uses in the battle.

10. The information processing system according to any one of the claim 1 to the claim 9, further comprising a server (202); and one or more game apparatuses (2), wherein
the server (202) comprises the data storer (202a, S309) and a receiver (202a, S301) that receives play data transmitted from the game apparatus (2), with which an input device (3, 4, 13) used by a user of the game apparatus in playing the game, and the data storer (202a, S309) stores the play data received by the receiver (202a, S301) as the play data with which an input device used by the first user in playing the game, and
each of the one or more game apparatuses (2) comprises the battle performer (81, S71-S83), the play state judger (81, S23, S25), the data acquirer (81, S31, S45, S59) and a transmitter (81, S97) that transmits play data with which an input device (3, 4, 13) that a user of the game apparatus uses in playing the game is associated to the server.

11. An information processing apparatus (1) comprising a touch panel as an input device and causing a computer (2) incorporated therein to function as:
a data acquirer (81, S31, S45, S59) configured to acquire play data from a data storage (85) that stores the play data indicating a play content that is data indicating a change of an operation input of a first user or data indicating a content of processing executed according to the operation input of the first user of a game that is played by at least a first user in association with the first user and the game;
a battle performer (81, S71-S83) configure to perform battle processing that a second user asynchronously plays a battle against the first user; and
a play state judger (81, S23, S25) configured to judge, when the second user plays the battle, a play state indicating a state related to a game play of the second user; wherein the play state judger judges whether the information processing apparatus (1) is being in a state where the information processing apparatus (1) cannot receive the operation input using the touch panel (13) as an input device by the second user and when it is determined that the information processing apparatus (1) is in a state where the information processing apparatus (1) can receive the operation input using the touch panel the play state judger determines whether the second user performed an operation input using the touch panel (13) as an input device in the game that the second user previously played; wherein
the data acquirer (81, S31, S45, S59) further configured to acquire play data that is selected based on the data indicating whether the first user performed the operation input using the touch panel (13) and the play state of the second user out of the play data associated with the game before the second user plays the battle, and
the battle performer (81, S71-S83) further configured to perform the battle processing of a battle that determines victory or defeat of the battle based on a score calculated based on the operation input of the second user and a score calculated based on the play content of the first user using the game that the second user asynchronously plays a battle against the first user by reproducing, using acquired play data, the play content of the first user associated with acquired play data.

12. An information processing program executable by a computer (2) of an information processing apparatus (1), wherein the information processing program causes a processor (81) to execute:
a data acquiring step (S31, S45, S59) that acquires play data from a data storage (85) that stores the play data indicating a play content that is data indicating a change of an operation input of a first user or data indicating a content of processing executed according to the operation input of the first user of a game that is played by at least the first user in association with the first user and the game, wherein the play data is data that indicates changes of operation input made by the first user during the play of the game or the play data is content of processing performed according to an operation input made by the first user during play of the game;
a battle performing step (S71-S83) that performs battle processing that a second user asynchronously plays a battle against the first user; and
a play state judging step that judges, when the second user plays the battle, a play state indicating a state related to a game play of the second user; wherein the play state judger judges whether the information processing apparatus (1) is being in a state where the information processing apparatus (1) cannot receive the operation input using the touch panel (13) as an input device by the second user and when it is determined that the information processing apparatus (1) is in a state where the information processing apparatus (1) can receive the operation input using the touch panel the play state judger determines whether the second user performed an operation input using the touch panel (13) as an input device in the game that the second user previously played; wherein
in the data acquiring step (S31, S45, S59), play data that is selected based on the data indicating whether the first user performed the operation input using the touch panel (13) and the play state of the second user out of the play data associated with the game is acquired before the second user plays the battle, and
in the battle performing step (S71-S83), the battle processing of a battle that determines victory or defeat of the battle based on a score calculated based on the operation input of the second user and a score calculated based on the play content of the first user using the game that the second user asynchronously plays the battle against the first user by reproducing, using acquired play data, the play content of the first user associated with acquired play data is performed.

13. An information processing method of an information processing apparatus (1), comprising:
(a) step (S31, S45, S59) of acquiring play data from a data storage (85) that stores the play data indicating a play content that is data indicating a change of an operation input of a first user or data indicating a content of processing executed according to the operation input of the first user of a game that is played by at least the first user in association with the first user and the game;
(b) step (S71-S83) of performing battle processing that a second user asynchronously plays a battle against the first user; and
(c) step (S23, S25) of judging, when the second user plays the battle, a play state indicating a state related to a game play of the second user, the play state judger judges whether the information processing apparatus (1) is being in a state where the information processing apparatus (1) cannot receive the operation input using the touch panel (13) as an input device by the second user and when it is determined that the information processing apparatus (1) is in a state where the information processing apparatus (1) can receive the operation input using the touch panel the play state judger determines whether the second user performed an operation input using the touch panel (13) as an input device in the game that the second user previously played; wherein
in the step (a), play data that is selected based on data indicating whether the first user performed the operation input using the touch panel (13) and the play state of the second user out of the play data associated with the game is acquired before the second user plays the battle, and
in the step (b), the battle processing of a battle that determines victory or defeat of the battle based on a score calculated based on the operation input of the second user and a score calculated based on the play content of the first user using the game that the second user asynchronously plays the battle against the first user by reproducing, using acquired play data, the play content of the first user associated with acquired play data is performed.

## Patentansprüche

1. Informationsverarbeitungssystem (200), umfassend:
eine Informationsverarbeitungsvorrichtung (1) mit einem Touchpanel (13);
einen Datenspeicher (202a, S309), der dazu konfiguriert ist, Spieldaten zu speichern, die einen Spielinhalt anzeigen, wobei es sich bei den Spieldaten um Daten handelt, die eine Änderung einer Bedienungseingabe eines ersten Benutzers anzeigen, oder um Daten, die einen Inhalt einer Verarbeitung anzeigen, die entsprechend der Bedienungseingabe des ersten Benutzers eines Spiels ausgeführt wird, das von zumindest dem ersten Benutzer in Zuordnung zu dem ersten Benutzer und dem Spiel gespielt wird;
einen Kampfausführer (81, S71-S83), der dazu konfiguriert ist, eine Kampfverarbeitung auszuführen, bei der ein zweiter Benutzer asynchron einen Kampf gegen den ersten Benutzer spielt;
einen Spielzustandsbeurteiler (81, S23, S25), der dazu konfiguriert ist, wenn der zweite Benutzer den Kampf spielt, einen Spielzustand zu beurteilen, der einen Zustand in Bezug auf ein Spiel des zweiten Benutzers angibt, wobei der Spielzustandsbeurteiler beurteilt, ob sich die Informationsverarbeitungsvorrichtung (1) in einem Zustand befindet, in dem die Informationsverarbeitungsvorrichtung (1) keine Bedienungseingabe unter Verwendung des Touchpanels (13) als Eingabegerät durch den zweiten Benutzer empfangen kann, und wenn bestimmt wird, dass sich die Informationsverarbeitungsvorrichtung (1) in einem Zustand befindet, in dem die Informationsverarbeitungsvorrichtung (1) eine Bedienungseingabe unter Verwendung des Touchpanels empfangen kann, bestimmt der Spielzustandsbeurteiler, ob der zweite Benutzer in dem Spiel, das der zweite Benutzer zuvor gespielt hat, eine Bedienungseingabe unter Verwendung des Touchpanels (13) als Eingabegerät durchgeführt hat; und
einen Datenerfasser (81, S31, S45, S59), der dazu konfiguriert ist, Spieldaten zu erfassen, die mit dem Spiel vor dem Zeitpunkt verbunden sind, zu dem der zweite Benutzer den Kampf spielt, wobei
der Datenspeicher (202a, S309) dazu konfiguriert ist, Daten zu speichern, die anzeigen, ob der erste Benutzer bei dem Spielen des Spiels eine Bedienungseingabe unter Verwendung des Touchpanels (13) durchgeführt hat, in Zuordnung zu den Spieldaten;
der Datenerfasser (81, S31, S45, S59) ferner dazu konfiguriert ist, Spieldaten zu erfassen, die auf der Grundlage der Daten, die anzeigen, ob der erste Benutzer eine Bedienungseingabe unter Verwendung des Touchpanels (13) durchgeführt hat, und des Spielzustands des zweiten Benutzers ausgewählt werden; und
der Kampfausführer (81, S71-S83) ferner dazu konfiguriert ist, die Kampfverarbeitung eines Kampfes auszuführen, bei dem Sieg oder Niederlage des Kampfes auf der Grundlage einer Punktzahl bestimmt werden, die auf der Grundlage der Bedienungseingabe des zweiten Benutzers berechnet wird, und einer Punktzahl, die auf der Grundlage des Spielinhalts des ersten Benutzers berechnet wird, indem der zweite Benutzer asynchron den Kampf gegen den ersten Benutzer spielt, wobei der Spielinhalt des ersten Benutzers unter Verwendung der erfassten Spieldaten reproduziert wird, die mit den erfassten Spieldaten verbunden sind.

2. Informationsverarbeitungssystem nach Anspruch 1, wobei der Datenerfasser (81, S31, S45, S59) ferner dazu konfiguriert ist, die Spieldaten durch bevorzugte Auswahl von Spieldaten zu erfassen, bei denen ein Eingabegerät (3, 4, 13), das mit dem vom zweiten Benutzer beim Spielen des Kampfes verwendeten Eingabegerät (3, 4, 12) identisch ist, verwendet wird.

3. Informationsverarbeitungssystem nach Anspruch 1, wobei der Datenerfasser (81, S31, S45, S59) ferner dazu konfiguriert ist, die Spieldaten dadurch zu erfassen, dass Spieldaten ausgewählt werden, bei denen ein Eingabegerät (3, 4, 13), das mit dem vom zweiten Benutzer verwendeten Eingabegerät (3, 4, 13) identisch ist, verwendet wird, und indem keine Spieldaten ausgewählt werden, bei denen ein Eingabegerät (3, 4, 13), das sich von dem vom zweiten Benutzer verwendeten Eingabegerät unterscheidet, verwendet wird, wenn der zweite Benutzer den Kampf spielt.

4. Informationsverarbeitungssystem nach einem der Ansprüche 1 bis 3, wobei der Spielzustandsbeurteiler (81, S23, S25) ferner dazu konfiguriert ist, den Spielzustand auf der Grundlage des Eingabegeräts (3, 4, 13) zu beurteilen, das der zweite Benutzer bis zu einem Zeitpunkt verwendet, zu dem der zweite Benutzer den Kampf spielt.

5. Informationsverarbeitungssystem nach Anspruch 4, wobei der Spielzustandsbeurteiler (81, S23, S25) ferner dazu konfiguriert ist, den Spielzustand auf der Grundlage des Eingabegeräts (3, 4, 13) zu beurteilen, das der zweite Benutzer in einem Spiel unmittelbar vor dem Zeitpunkt verwendet, zu dem der zweite Benutzer den Kampf spielt.

6. Informationsverarbeitungssystem nach einem der Ansprüche 1 bis 5, wobei der Datenerfasser (81, S31, S45, S59) ferner dazu konfiguriert ist, Spieldaten, bei denen ein Touch-Eingabegerät (13) als Eingabegerät (3, 4, 13) verwendet wird, das der erste Benutzer benutzt, schwerer auswählbar zu machen, wenn das Eingabegerät, das der zweite Benutzer beim Spielen des Kampfes verwendet, ein Tasten-Eingabegerät (3, 4) ist.

7. Informationsverarbeitungssystem nach einem der Ansprüche 1 bis 6, wobei der Datenerfasser (81, S31, S45, S59) ferner dazu konfiguriert ist, mehrere Spieldaten zu erfassen, und eine Datenpräsentationseinheit (81, S33, S47, S61) umfasst, die mehrere Spieldaten erfasst und die Mehrzahl der erfassten Spieldaten so präsentiert, dass der zweite Benutzer Spieldaten auswählen kann.

8. Informationsverarbeitungssystem nach einem der Ansprüche 1 bis 7, ferner umfassend einen Beziehungsbestimmer (81, S41, S55), der dazu konfiguriert ist, zu bestimmen, welche Art von Beziehung zwischen dem ersten Benutzer und dem zweiten Benutzer besteht, wobei
der Datenerfasser (81, S31, S45, S59) ferner dazu konfiguriert ist, Spieldaten zu erfassen, die auf der Grundlage des vom ersten Benutzer verwendeten Eingabegeräts und des Spielzustands des zweiten Benutzers ausgewählt werden, wenn die Beziehung eine erste Beziehung ist, und
wenn die Beziehung eine zweite Beziehung ist, der Datenerfasser Spieldaten erfasst, indem Spieldaten zugelassen werden, bei denen ein Eingabegerät (3, 4, 13), das sich von dem vom zweiten Benutzer verwendeten Eingabegerät (3, 4, 13) unterscheidet, ausgewählt werden kann.

9. Informationsverarbeitungssystem nach einem der Ansprüche 1 bis 7, wobei, wenn der Datenspeicher (202a, S309) ferner dazu konfiguriert ist, Spieldaten zu speichern, bei denen eine Eingabe ausschließlich von dem Eingabegerät (3, 4, 13), das vom ersten Benutzer vor einem Start des Spiels festgelegt wurde, in Zuordnung zu dem ersten Benutzer und dem Spiel erfolgt, und
der Kampfausführer (81, S71-S83) ferner dazu konfiguriert ist, zuzulassen, wenn das vom ersten Benutzer festgelegte Eingabegerät ein erstes Eingabegerät (3, 4) ist, ausschließlich das erste Eingabegerät (3, 4) als Eingabegerät, das der zweite Benutzer im Kampf verwendet, und wenn das vom zweiten Benutzer festgelegte Eingabegerät ein zweites Eingabegerät (13) ist, lässt der Kampfausführer ein anderes Eingabegerät als das zweite Eingabegerät (13) als Eingabegerät zu, das der zweite Benutzer im Kampf verwendet.

10. Informationsverarbeitungssystem nach einem der Ansprüche 1 bis 9, ferner umfassend einen Server (202) und eine oder mehrere Spielvorrichtungen (2), wobei
der Server (202) den Datenspeicher (202a, S309) und einen Empfänger (202a, S301) umfasst, der Spieldaten empfängt, die von der Spielvorrichtung (2) übertragen werden und mit denen ein Eingabegerät (3, 4, 13) verknüpft ist, das von einem Benutzer der Spielvorrichtung beim Spielen des Spiels verwendet wird, und der Datenspeicher (202a, S309) die vom Empfänger (202a, S301) empfangenen Spieldaten als die Spieldaten speichert, mit denen ein Eingabegerät verknüpft ist, das vom ersten Benutzer beim Spielen des Spiels verwendet wird, und
jede der einen oder mehreren Spielvorrichtungen (2) den Kampfausführer (81, S71-S83), den Spielzustandsbeurteiler (81, S23, S25), den Datenerfasser (81, S31, S45, S59) und einen Sender (81, S97) umfasst, der Spieldaten, mit denen ein Eingabegerät (3, 4, 13), das ein Benutzer der Spielvorrichtung beim Spielen des Spiels verwendet, verknüpft ist, an den Server überträgt.

11. Informationsverarbeitungsvorrichtung (1), umfassend ein Touchpanel als Eingabegerät und die einen darin eingebauten Computer (2) dazu veranlasst, zu fungieren als:
ein Datenerfasser (81, S31, S45, S59), der dazu konfiguriert ist, Spieldaten aus einem Datenspeicher (85) zu erfassen, der die Spieldaten speichert, die einen Spielinhalt anzeigen, wobei es sich um Daten handelt, die eine Änderung einer Bedienungseingabe eines ersten Benutzers anzeigen, oder um Daten, die einen Inhalt einer Verarbeitung anzeigen, die entsprechend der Bedienungseingabe des ersten Benutzers eines Spiels ausgeführt wird, das von zumindest einem ersten Benutzer in Zuordnung zu dem ersten Benutzer und dem Spiel gespielt wird;
einen Kampfausführer (81, S71-S83), der dazu konfiguriert ist, eine Kampfverarbeitung auszuführen, bei der ein zweiter Benutzer asynchron einen Kampf gegen den ersten Benutzer spielt; und
einen Spielzustandsbeurteiler (81, S23, S25), der dazu konfiguriert ist, wenn der zweite Benutzer den Kampf spielt, einen Spielzustand zu beurteilen, der einen Zustand in Bezug auf ein Spielen des Spiels durch den zweiten Benutzer angibt; wobei der Spielzustandsbeurteiler beurteilt, ob sich die Informationsverarbeitungsvorrichtung (1) in einem Zustand befindet, in dem die Informationsverarbeitungsvorrichtung (1) die Bedienungseingabe unter Verwendung des Touchpanels (13) als Eingabegerät durch den zweiten Benutzer nicht empfangen kann, und wenn bestimmt wird, dass sich die Informationsverarbeitungsvorrichtung (1) in einem Zustand befindet, in dem die Informationsverarbeitungsvorrichtung (1) die Bedienungseingabe unter Verwendung des Touchpanels empfangen kann, bestimmt der Spielzustandsbeurteiler, ob der zweite Benutzer in dem Spiel, das der zweite Benutzer zuvor gespielt hat, eine Bedienungseingabe unter Verwendung des Touchpanels (13) als Eingabegerät durchgeführt hat; wobei
der Datenerfasser (81, S31, S45, S59) ferner dazu konfiguriert ist, aus den mit dem Spiel verbundenen Spieldaten vor dem Zeitpunkt, zu dem der zweite Benutzer den Kampf spielt, Spieldaten zu erfassen, die auf der Grundlage der Daten, die anzeigen, ob der erste Benutzer die Bedienungseingabe unter Verwendung des Touchpanels (13) durchgeführt hat, und des Spielzustands des zweiten Benutzers ausgewählt werden, und
der Kampfausführer (81, S71-S83) ferner dazu konfiguriert ist, die Kampfverarbeitung eines Kampfes auszuführen, bei dem Sieg oder Niederlage des Kampfes auf der Grundlage einer Punktzahl bestimmt wird, die auf der Grundlage der Bedienungseingabe des zweiten Benutzers berechnet wird, und einer Punktzahl, die auf der Grundlage des Spielinhalts des ersten Benutzers berechnet wird, indem der zweite Benutzer asynchron den Kampf gegen den ersten Benutzer spielt, indem unter Verwendung der erfassten Spieldaten der Spielinhalt des ersten Benutzers, der mit den erfassten Spieldaten verbunden ist, reproduziert wird.

12. Informationsverarbeitungsprogramm, das von einem Computer (2) einer Informationsverarbeitungsvorrichtung (1) ausführbar ist, wobei das Informationsverarbeitungsprogramm einen Prozessor (81) dazu veranlasst, Folgendes auszuführen:
einen Datenerfassungsschritt (S31, S45, S59), der Spieldaten aus einem Datenspeicher (85) erfasst, der die Spieldaten speichert, die einen Spielinhalt anzeigen, wobei es sich bei den Spieldaten um Daten handelt, die eine Änderung einer Bedienungseingabe eines ersten Benutzers anzeigen, oder um Daten, die einen Inhalt einer Verarbeitung anzeigen, die entsprechend der Bedienungseingabe des ersten Benutzers eines Spiels ausgeführt wird, das von zumindest dem ersten Benutzer in Zuordnung zu dem ersten Benutzer und dem Spiel gespielt wird, wobei die Spieldaten Daten sind, die Änderungen der Bedienungseingabe anzeigen, die vom ersten Benutzer während des Spielens des Spiels vorgenommen werden, oder die Spieldaten Inhalte der Verarbeitung sind, die entsprechend einer Bedienungseingabe ausgeführt wird, die vom ersten Benutzer während des Spielens des Spiels vorgenommen wird;
einen Kampfausführungsschritt (S71-S83), der eine Kampfverarbeitung ausführt, bei der ein zweiter Benutzer asynchron einen Kampf gegen den ersten Benutzer spielt; und
einen Spielzustandsbeurteilungsschritt, der, wenn der zweite Benutzer den Kampf spielt, einen Spielzustand beurteilt, der einen Zustand in Bezug auf ein Spielen des Spiels durch den zweiten Benutzer angibt; wobei der Spielzustandsbeurteiler beurteilt, ob sich die Informationsverarbeitungsvorrichtung (1) in einem Zustand befindet, in dem die Informationsverarbeitungsvorrichtung (1) die Bedienungseingabe unter Verwendung des Touchpanels (13) als Eingabegerät durch den zweiten Benutzer nicht empfangen kann, und wenn bestimmt wird, dass sich die Informationsverarbeitungsvorrichtung (1) in einem Zustand befindet, in dem die Informationsverarbeitungsvorrichtung (1) die Bedienungseingabe unter Verwendung des Touchpanels empfangen kann, bestimmt der Spielzustandsbeurteiler, ob der zweite Benutzer in dem Spiel, das der zweite Benutzer zuvor gespielt hat, eine Bedienungseingabe unter Verwendung des Touchpanels (13) als Eingabegerät durchgeführt hat; wobei
im Datenerfassungsschritt (S31, S45, S59) vor dem Zeitpunkt, zu dem der zweite Benutzer den Kampf spielt, Spieldaten erfasst werden, die aus den mit dem Spiel verbundenen Spieldaten auf der Grundlage der Daten, die anzeigen, ob der erste Benutzer die Bedienungseingabe unter Verwendung des Touchpanels (13) durchgeführt hat, und des Spielzustands des zweiten Benutzers ausgewählt werden, und
im Kampfausführungsschritt (S71-S83) die Kampfverarbeitung eines Kampfes ausgeführt wird, bei dem Sieg oder Niederlage des Kampfes auf der Grundlage einer Punktzahl bestimmt wird, die auf der Grundlage der Bedienungseingabe des zweiten Benutzers berechnet wird, und einer Punktzahl, die auf der Grundlage des Spielinhalts des ersten Benutzers berechnet wird, indem der zweite Benutzer asynchron den Kampf gegen den ersten Benutzer spielt, indem unter Verwendung der erfassten Spieldaten der Spielinhalt des ersten Benutzers, der mit den erfassten Spieldaten verbunden ist, reproduziert wird, ausgeführt wird.

13. Informationsverarbeitungsverfahren einer Informationsverarbeitungsvorrichtung (1), umfassend:
(a) Schritt (S31, S45, S59) des Erfassens von Spieldaten aus einem Datenspeicher (85), der die Spieldaten speichert, die einen Spielinhalt anzeigen, wobei es sich um Daten handelt, die eine Änderung einer Bedienungseingabe eines ersten Benutzers anzeigen, oder um Daten, die einen Inhalt einer Verarbeitung anzeigen, die entsprechend der Bedienungseingabe des ersten Benutzers eines Spiels ausgeführt wird, das von zumindest dem ersten Benutzer in Zuordnung zu dem ersten Benutzer und dem Spiel gespielt wird;
(b) Schritt (S71-S83) des Ausführens einer Kampfverarbeitung, bei der ein zweiter Benutzer asynchron einen Kampf gegen den ersten Benutzer spielt; und
(c) Schritt (S23, S25) des Beurteilens, wenn der zweite Benutzer den Kampf spielt, eines Spielzustands, der einen Zustand in Bezug auf ein Spielen des Spiels durch den zweiten Benutzer angibt, wobei der Spielzustandsbeurteiler beurteilt, ob sich die Informationsverarbeitungsvorrichtung (1) in einem Zustand befindet, in dem die Informationsverarbeitungsvorrichtung (1) die Bedienungseingabe unter Verwendung des Touchpanels (13) als Eingabegerät durch den zweiten Benutzer nicht empfangen kann, und wenn bestimmt wird, dass sich die Informationsverarbeitungsvorrichtung (1) in einem Zustand befindet, in dem die Informationsverarbeitungsvorrichtung (1) die Bedienungseingabe unter Verwendung des Touchpanels empfangen kann, bestimmt der Spielzustandsbeurteiler, ob der zweite Benutzer in dem Spiel, das der zweite Benutzer zuvor gespielt hat, eine Bedienungseingabe unter Verwendung des Touchpanels (13) als Eingabegerät durchgeführt hat; wobei
im Schritt (a) Spieldaten, die auf der Grundlage von Daten, die anzeigen, ob der erste Benutzer die Bedienungseingabe unter Verwendung des Touchpanels (13) durchgeführt hat, und des Spielzustands des zweiten Benutzers aus den mit dem Spiel verbundenen Spieldaten ausgewählt werden, vor dem Zeitpunkt, zu dem der zweite Benutzer den Kampf spielt, erfasst werden, und
im Schritt (b) die Kampfverarbeitung eines Kampfes ausgeführt wird, bei dem Sieg oder Niederlage des Kampfes auf der Grundlage einer Punktzahl bestimmt werden, die auf der Grundlage der Bedienungseingabe des zweiten Benutzers berechnet wird, und einer Punktzahl, die auf der Grundlage des Spielinhalts des ersten Benutzers berechnet wird, indem der zweite Benutzer asynchron den Kampf gegen den ersten Benutzer spielt, wobei unter Verwendung der erfassten Spieldaten der Spielinhalt des ersten Benutzers reproduziert wird, der mit den erfassten Spieldaten verbunden ist.

## Revendications

1. Un système de traitement de l'information (200), comprenant :
un appareil de traitement de l'information (1) comprenant un écran tactile (13);
un dispositif de stockage de données (202a, S309) configuré pour stocker des données de jeu indiquant un contenu de jeu, lesdites données de jeu étant des données indiquant une modification d'une entrée d'opération d'un premier utilisateur ou des données indiquant un contenu de traitement exécuté conformément à l'entrée d'opération du premier utilisateur d'un jeu auquel participe au moins le premier utilisateur, en association avec le premier utilisateur et le jeu ;
un dispositif d'exécution de combat (81, S71-S83) configuré pour exécuter un traitement de combat dans lequel un second utilisateur joue de manière asynchrone un combat contre le premier utilisateur ;
un dispositif de jugement de l'état de jeu (81, S23, S25) configuré pour juger, lorsque le second utilisateur joue le combat, un état de jeu indiquant un état lié à la partie jouée par le second utilisateur,
dans lequel le dispositif de jugement de l'état de jeu juge si l'appareil de traitement de l'information (1) se trouve dans un état dans lequel l'appareil de traitement de l'information (1) ne peut pas recevoir une entrée d'opération du second utilisateur à l'aide de l'écran tactile (13) en tant que dispositif d'entrée, et, lorsqu'il est déterminé que l'appareil de traitement de l'information (1) se trouve dans un état dans lequel l'appareil de traitement de l'information (1) peut recevoir une entrée d'opération à l'aide de l'écran tactile, le dispositif de jugement de l'état de jeu détermine si le second utilisateur a effectué une entrée d'opération à l'aide de l'écran tactile (13) en tant que dispositif d'entrée dans le jeu auquel le second utilisateur a joué précédemment ; et
un dispositif d'acquisition de données (81, S31, S45, S59) configuré pour acquérir des données de jeu associées au jeu avant que le second utilisateur ne joue le combat,
dans lequel
le dispositif de stockage de données (202a, S309) est configuré pour stocker, en association avec les données de jeu, des données indiquant si le premier utilisateur a effectué une entrée d'opération à l'aide de l'écran tactile (13) lors de la partie jouée ;
le dispositif d'acquisition de données (81, S31, S45, S59) est en outre configuré pour acquérir des données de jeu sélectionnées sur la base des données indiquant si le premier utilisateur a effectué une entrée d'opération à l'aide de l'écran tactile (13) et de l'état de jeu du second utilisateur ; et
le dispositif d'exécution de combat (81, S71-S83) est en outre configuré pour exécuter le traitement de combat d'un combat qui détermine la victoire ou la défaite sur la base d'un score calculé à partir de l'entrée d'opération du second utilisateur et d'un score calculé à partir du contenu de jeu du premier utilisateur, en reproduisant, à l'aide des données de jeu acquises, le contenu de jeu du premier utilisateur associé aux données de jeu acquises, le second utilisateur jouant de manière asynchrone le combat contre le premier utilisateur.

2. Le système de traitement de l'information selon la revendication 1, dans lequel le dispositif d'acquisition de données (81, S31, S45, S59) est en outre configuré pour acquérir les données de jeu en sélectionnant de manière préférentielle des données de jeu pour lesquelles le dispositif d'entrée (3, 4, 13) utilisé est identique au dispositif d'entrée (3, 4, 12) utilisé par le second utilisateur lorsqu'il joue le combat.

3. Le système de traitement de l'information selon la revendication 1, dans lequel le dispositif d'acquisition de données (81, S31, S45, S59) est en outre configuré pour acquérir les données de jeu en sélectionnant des données de jeu pour lesquelles le dispositif d'entrée (3, 4, 13) utilisé est identique au dispositif d'entrée (3, 4, 13) utilisé par le second utilisateur, et en ne sélectionnant pas des données de jeu pour lesquelles le dispositif d'entrée (3, 4, 13) utilisé est différent du dispositif d'entrée utilisé par le second utilisateur lorsque celui-ci joue le combat.

4. Le système de traitement de l'information selon l'une quelconque des revendications 1 à 3, dans lequel le dispositif de jugement de l'état de jeu (81, S23, S25) est en outre configuré pour juger l'état de jeu sur la base du dispositif d'entrée (3, 4, 13) utilisé par le second utilisateur jusqu'au moment où le second utilisateur joue le combat.

5. Le système de traitement de l'information selon la revendication 4, dans lequel le dispositif de jugement de l'état de jeu (81, S23, S25) est en outre configuré pour juger l'état de jeu sur la base du dispositif d'entrée (3, 4, 13) utilisé par le second utilisateur dans un jeu immédiatement avant le moment où le second utilisateur joue le combat.

6. Le système de traitement de l'information selon l'une quelconque des revendications 1 à 5, dans lequel le dispositif d'acquisition de données (81, S31, S45, S59) est en outre configuré pour rendre difficile la sélection de données de jeu associées à un dispositif d'entrée tactile (13) en tant que dispositif d'entrée (3, 4, 13) utilisé par le premier utilisateur, lorsque le dispositif d'entrée utilisé par le second utilisateur lorsqu'il joue le combat est un dispositif d'entrée à boutons (3, 4).

7. Le système de traitement de l'information selon l'une quelconque des revendications 1 à 6, dans lequel le dispositif d'acquisition de données (81, S31, S45, S59) est en outre configuré pour acquérir une pluralité de données de jeu, et comprend un dispositif de présentation de données (81, S33, S47, S61) qui acquiert la pluralité de données de jeu et présente lesdites données de jeu de manière à permettre au second utilisateur de sélectionner des données de jeu.

8. Le système de traitement de l'information selon l'une quelconque des revendications 1 à 7, comprenant en outre un dispositif de détermination de relation (81, S41, S55) configuré pour déterminer quel type de relation existe entre le premier utilisateur et le second utilisateur, dans lequel
le dispositif d'acquisition de données (81, S31, S45, S59) est en outre configuré pour acquérir des données de jeu sélectionnées sur la base du dispositif d'entrée utilisé par le premier utilisateur et de l'état de jeu du second utilisateur lorsque la relation est une première relation ; et
lorsque la relation est une seconde relation, le dispositif d'acquisition de données acquiert les données de jeu en autorisant la sélection de données de jeu pour lesquelles le dispositif d'entrée (3, 4, 13) utilisé est différent du dispositif d'entrée (3, 4, 13) utilisé par le second utilisateur.

9. Le système de traitement de l'information selon l'une quelconque des revendications 1 à 7, dans lequel
le dispositif de stockage de données (202a, S309) est en outre configuré pour stocker des données de jeu provenant uniquement du dispositif d'entrée (3, 4, 13) désigné par le premier utilisateur avant le début du jeu, en association avec le premier utilisateur et le jeu ; et
le dispositif d'exécution de combat (81, S71-S83) est en outre configuré pour autoriser, lorsque le dispositif d'entrée désigné par le premier utilisateur est un premier dispositif d'entrée (3, 4), uniquement le premier dispositif d'entrée (3, 4) en tant que dispositif d'entrée utilisé par le second utilisateur dans le combat, et, lorsque le dispositif d'entrée désigné par le second utilisateur est un second dispositif d'entrée (13), pour autoriser un dispositif d'entrée autre que le second dispositif d'entrée (13) en tant que dispositif d'entrée utilisé par le second utilisateur dans le combat.

10. Le système de traitement de l'information selon l'une quelconque des revendications 1 à 9, comprenant en outre un serveur (202) et un ou plusieurs appareils de jeu (2), dans lequel
le serveur (202) comprend le dispositif de stockage de données (202a, S309) et un dispositif de réception (202a, S301) qui reçoit des données de jeu transmises depuis l'appareil de jeu (2), lesdites données de jeu étant associées à un dispositif d'entrée (3, 4, 13) utilisé par un utilisateur de l'appareil de jeu lors de la partie jouée, et le dispositif de stockage de données (202a, S309) stocke les données de jeu reçues par le dispositif de réception (202a, S301) en tant que données de jeu associées au dispositif d'entrée utilisé par le premier utilisateur lors de la partie jouée ; et
chacun des un ou plusieurs appareils de jeu (2) comprend le dispositif d'exécution de combat (81, S71-S83), le dispositif de jugement de l'état de jeu (81, S23, S25), le dispositif d'acquisition de données (81, S31, S45, S59) et un dispositif de transmission (81, S97) qui transmet au serveur des données de jeu associées au dispositif d'entrée (3, 4, 13) utilisé par un utilisateur de l'appareil de jeu lors de la partie jouée.

11. Un appareil de traitement de l'information (1) comprenant un écran tactile en tant que dispositif d'entrée et amenant un ordinateur (2) intégré à fonctionner comme :
un dispositif d'acquisition de données (81, S31, S45, S59) configuré pour acquérir des données de jeu depuis un dispositif de stockage de données (85) qui stocke des données de jeu indiquant un contenu de jeu, lesdites données de jeu étant des données indiquant une modification d'une entrée d'opération d'un premier utilisateur ou des données indiquant un contenu de traitement exécuté conformément à l'entrée d'opération du premier utilisateur d'un jeu auquel participe au moins le premier utilisateur, en association avec le premier utilisateur et le jeu ;
un dispositif d'exécution de combat (81, S71-S83) configuré pour exécuter un traitement de combat dans lequel un second utilisateur joue de manière asynchrone un combat contre le premier utilisateur ; et
un dispositif de jugement de l'état de jeu (81, S23, S25) configuré pour juger, lorsque le second utilisateur joue le combat, un état de jeu indiquant un état lié à la partie jouée par le second utilisateur, dans lequel
le dispositif de jugement de l'état de jeu juge si l'appareil de traitement de l'information (1) se trouve dans un état dans lequel l'appareil de traitement de l'information (1) ne peut pas recevoir une entrée d'opération du second utilisateur à l'aide de l'écran tactile (13) en tant que dispositif d'entrée, et, lorsqu'il est déterminé que l'appareil de traitement de l'information (1) se trouve dans un état dans lequel l'appareil de traitement de l'information (1) peut recevoir une entrée d'opération à l'aide de l'écran tactile, détermine si le second utilisateur a effectué une entrée d'opération à l'aide de l'écran tactile (13) dans le jeu auquel il a joué précédemment ;
le dispositif d'acquisition de données (81, S31, S45, S59) est en outre configuré pour acquérir, parmi les données de jeu associées au jeu avant que le second utilisateur ne joue le combat, des données de jeu sélectionnées sur la base des données indiquant si le premier utilisateur a effectué une entrée d'opération à l'aide de l'écran tactile (13) et de l'état de jeu du second utilisateur ; et
le dispositif d'exécution de combat (81, S71-S83) est en outre configuré pour exécuter le traitement de combat d'un combat qui détermine la victoire ou la défaite sur la base d'un score calculé à partir de l'entrée d'opération du second utilisateur et d'un score calculé à partir du contenu de jeu du premier utilisateur, en reproduisant, à l'aide des données de jeu acquises, le contenu de jeu du premier utilisateur associé aux données de jeu acquises.

12. Un programme de traitement de l'information exécutable par un ordinateur (2) d'un appareil de traitement de l'information (1), dans lequel le programme de traitement de l'information amène un processeur (81) à exécuter :
une étape d'acquisition de données (S31, S45, S59) consistant à acquérir des données de jeu depuis un dispositif de stockage de données (85) qui stocke des données de jeu indiquant un contenu de jeu, lesdites données de jeu étant des données indiquant des modifications d'entrées d'opération effectuées par un premier utilisateur pendant la partie jouée ou des contenus de traitement exécutés conformément aux entrées d'opération effectuées par le premier utilisateur pendant la partie jouée ;
une étape d'exécution de combat (S71-S83) consistant à exécuter un traitement de combat dans lequel un second utilisateur joue de manière asynchrone un combat contre le premier utilisateur ; et
une étape de jugement de l'état de jeu consistant à juger, lorsque le second utilisateur joue le combat, un état de jeu indiquant un état lié à la partie jouée par le second utilisateur, dans laquelle
le dispositif de jugement de l'état de jeu juge si l'appareil de traitement de l'information (1) se trouve dans un état dans lequel l'appareil de traitement de l'information (1) ne peut pas recevoir une entrée d'opération à l'aide de l'écran tactile (13) en tant que dispositif d'entrée par le second utilisateur, et, lorsqu'il est déterminé que l'appareil de traitement de l'information (1) se trouve dans un état dans lequel l'appareil de traitement de l'information (1) peut recevoir une entrée d'opération à l'aide de l'écran tactile, le dispositif de jugement de l'état de jeu détermine si le second utilisateur a effectué une entrée d'opération à l'aide de l'écran tactile (13) en tant que dispositif d'entrée dans le jeu auquel le second utilisateur a joué précédemment ;
lors de l'étape d'acquisition de données (S31, S45, S59), des données de jeu sélectionnées sur la base des données indiquant si le premier utilisateur a effectué une entrée d'opération à l'aide de l'écran tactile (13) et de l'état de jeu du second utilisateur sont acquises, parmi les données de jeu associées au jeu, avant que le second utilisateur ne joue le combat ; et
lors de l'étape d'exécution de combat (S71-S83), le traitement de combat d'un combat qui détermine la victoire ou la défaite sur la base d'un score calculé à partir de l'entrée d'opération du second utilisateur et d'un score calculé à partir du contenu de jeu du premier utilisateur est exécuté, en reproduisant, à l'aide des données de jeu acquises, le contenu de jeu du premier utilisateur associé aux données de jeu acquises.

13. Un procédé de traitement de l'information d'un appareil de traitement de l'information (1), comprenant :
(a) une étape (S31, S45, S59) d'acquisition de données de jeu depuis un dispositif de stockage de données (85) qui stocke des données de jeu indiquant un contenu de jeu, lesdites données de jeu étant des données indiquant une modification d'une entrée d'opération d'un premier utilisateur ou des données indiquant un contenu de traitement exécuté conformément à l'entrée d'opération du premier utilisateur d'un jeu auquel participe au moins le premier utilisateur, en association avec le premier utilisateur et le jeu ;
(b) une étape (S71-S83) d'exécution d'un traitement de combat dans lequel un second utilisateur joue de manière asynchrone un combat contre le premier utilisateur ; et
(c) une étape (S23, S25) de jugement, lorsque le second utilisateur joue le combat, d'un état de jeu indiquant un état lié à la partie jouée par le second utilisateur, dans laquelle
le dispositif de jugement de l'état de jeu juge si l'appareil de traitement de l'information (1) se trouve dans un état dans lequel l'appareil de traitement de l'information (1) ne peut pas recevoir une entrée d'opération à l'aide de l'écran tactile (13) en tant que dispositif d'entrée par le second utilisateur, et, lorsqu'il est déterminé que l'appareil de traitement de l'information (1) se trouve dans un état dans lequel l'appareil de traitement de l'information (1) peut recevoir une entrée d'opération à l'aide de l'écran tactile, le dispositif de jugement de l'état de jeu détermine si le second utilisateur a effectué une entrée d'opération à l'aide de l'écran tactile (13) en tant que dispositif d'entrée dans le jeu auquel le second utilisateur a joué précédemment ;
à l'étape (a), des données de jeu sélectionnées sur la base des données indiquant si le premier utilisateur a effectué une entrée d'opération à l'aide de l'écran tactile (13) et de l'état de jeu du second utilisateur sont acquises, parmi les données de jeu associées au jeu, avant que le second utilisateur ne joue le combat ; et
à l'étape (b), le traitement de combat d'un combat qui détermine la victoire ou la défaite sur la base d'un score calculé à partir de l'entrée d'opération du second utilisateur et d'un score calculé à partir du contenu de jeu du premier utilisateur est exécuté, en reproduisant, à l'aide des données de jeu acquises, le contenu de jeu du premier utilisateur associé aux données de jeu acquises.
